(19) Europäisches Patentamt
European Patent Office
Office européen des brevets

(11) **EP 3 217 651 A2**

(12) **EUROPEAN PATENT APPLICATION**

(43) Date of publication:
**13.09.2017 Bulletin 2017/37**

(51) Int Cl.:
**H04N 5/44** (2011.01)     **H04N 21/485** (2011.01)

(21) Application number: **17157665.5**

(22) Date of filing: **23.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.03.2016 KR 20160029669**

(71) Applicant: **Samsung Electronics Co., Ltd.**
**Gyeonggi-do 16677 (KR)**

(72) Inventor: **JUNG, Dae-hun**
**Seoul (KR)**

(74) Representative: **Hewett, Jonathan Michael**
**Richard et al**
**Venner Shipley LLP**
**200 Aldersgate**
**London EC1A 4HD (GB)**

(54) **DISPLAY DEVICE AND OPERATING METHOD THEREOF**

(57)     Disclosed are a display device and method of operating the display device. The display device includes a display configured to output a user interface; an audio output interface comprising audio output interface circuitry; and a controller configured to detect a control signal for moving a focus on the user interface, to determine an attribute of audio based on a location of the focus corresponding to the control signal, and to control the audio output interface to output a sound feedback having the determined audio attribute.

**FIG. 6**

```
                    ┌─────────┐
                    │  START  │
                    └────┬────┘
                         │
        ┌────────────────▼────────────────┐
        │     PROVIDE USER INTERFACE      │──── 610
        └────────────────┬────────────────┘
                         │
        ┌────────────────▼────────────────┐
        │  DETECT INPUT SIGNAL MOVING FOCUS│──── 620
        │        ON USER INTERFACE         │
        └────────────────┬────────────────┘
                         │
        ┌────────────────▼────────────────┐
        │  DETERMINE AUDIO ATTRIBUTE BASED ON│── 630
        │ LOCATION OF FOCUS CORRESPONDING TO INPUT SIGNAL │
        └────────────────┬────────────────┘
                         │
        ┌────────────────▼────────────────┐
        │ OUTPUT SOUND FEEDBACK HAVING DETERMINED│── 640
        │        AUDIO ATTRIBUTE           │
        └────────────────┬────────────────┘
                         │
                    ┌────▼────┐
                    │   END   │
                    └─────────┘
```

EP 3 217 651 A2

**Description**

The present invention relates generally to display devices and operating methods thereof.

User interfaces displayed on display devices such as televisions (TVs), etc. are developed to have more functions and easier, more intuitive, and simper designs. However, most currently developed sound feedback in a wide screen device, such as a TV, acts to merely inform a user about only whether a manipulation is successful irrespective of a location of a focus region selected by the user.

Also, a conventional 2.1/5.1 sound source originally intended by a content production plan is failing due to a limitation of a current TV sound system and a market pursuing more realistic image quality/pixel number, and thus, it is difficult to produce a realistic sound when reproduced in an actual display.

Display devices capable of providing a feedback that enables clear recognition with respect to a user manipulation by providing an audio user interface, e.g., a sound feedback, when a focus region moves in a user interface displayed on a display device and operating methods of the display devices are provided by embodiments of the present invention.

Additional aspects of the present invention will be set forth in part in the description which follows and, in part, will be apparent from the description.

According to an example aspect of an example embodiment, a display device includes: a display configured to output a user interface; an audio output interface comprising audio output interface circuitry; and a controller configured to detect a control signal for moving a focus on the user interface, to determine an attribute of audio based on a location of the focus corresponding to the control signal, and to control the audio output interface to output a sound feedback having the determined audio attribute.

The audio attribute may include at least one of a volume of a top speaker, a bottom speaker, a left speaker, a right speaker, a front speaker, or a rear speaker, transposition, reverb, and equalization.

The display may output the user interface including a two-dimensional (2D) grid, wherein the audio output interface includes at least two speakers, and wherein the controller determines the audio attribute by using at least one of volumes and transpositions of the at least two speakers based on the location of the focus.

The controller may determine a volume of a left speaker or a right speaker based on an x axis location of the focus on the 2D grid and determines a transpose value based on a y axis location of the focus on the 2D grid.

The display may output the user interface including a three-dimensional (3D) grid, wherein the audio output interface includes at least two speakers, and wherein the controller determines the audio attribute using at least one of volumes, transpositions, and reverbs of the at least two speakers based on the location of the focus.

The controller may determine a volume of a left speaker or a right speaker based on an x axis location of the focus on the 3D grid, determines a transpose value based on a y axis location of the focus on the 3D grid, and determines a reverb value based on a z axis location of the focus on the 3D grid.

The display may provide a live screen, and wherein the controller determines the audio attribute based on at least one of a location of an object moving in content reproduced on the live screen and an attribute of the content.

The controller may determine a volume of a left speaker or a right speaker based on an x axis location of the object on the live screen, determines a volume of a top speaker or a bottom speaker based on a y axis location of the object on the live screen, and determines a reverb value based on a z axis location of the object on the live screen.

According to an example aspect of another example embodiment, a display device includes a display configured to display audio visual content; an audio output interface comprising audio output circuitry; and a controller configured to detect an input signal indicating a movement of a control device, to determine a volume of audio included in the audio visual content based on the input signal, and to control the audio output interface to output the audio with the determined volume.

The input signal of the control device may include at least one of a signal indicating a movement of the control device in a diagonal direction with respect to the display, a signal indicating a movement of the control device that inclines forward and backward, and a swipe signal on a touch sensitive screen provided in the control device.

According to an example aspect of another example embodiment, a display method includes: detecting a control signal for moving a focus on a user interface; determining an attribute of audio based on a location of the focus corresponding to the control signal; and outputting a sound feedback having the determined audio attribute.

According to an example aspect of another example embodiment, an operation method of a display device includes: displaying audio visual content; detecting an input signal indicating a movement of a control device; determining a volume of audio included in the audio visual content based on the input signal; and outputting the audio with the determined volume.

These and/or other aspects, features and attendant advantages of the present invention will become apparent and more readily appreciated from the following detailed description, taken in conjunction with the accompanying drawings, in which like reference numerals refer to like elements, and wherein:

FIG. 1 is a diagram illustrating an example of the present invention according to an example embodiment;

FIG. 2 is a block diagram illustrating an example display device and an example control device, according to an example embodiment of the present invention;

FIG. 3 is a block diagram illustrating the display device of FIG. 2;

FIG. 4 is a block diagram illustrating the control device of FIG. 2;

FIG. 5 is a diagram illustrating examples of a control device according to an example embodiment of the present invention;

FIG. 6 is a flowchart illustrating an example operation process of a display device, according to an example embodiment of the present invention;

FIG. 7 is a flowchart illustrating an example process of determining an audio attribute according to a movement of a focus on a user interface including a two-dimensional (2D) grid, according to an example embodiment of the present invention;

FIG. 8 is a diagram illustrating an example of a display device having a user interface including a 2D grid and an audio environment, according to an example embodiment of the present invention;

FIG. 9 is a diagram illustrating an example of adjusting an audio attribute according to a movement of a focus in the display device of FIG. 8;

FIG. 10 is a diagram illustrating an example of an audio attribute determined according to a first path corresponding to a movement of a focus on a user interface including a 2D grid;

FIG. 11 is a diagram illustrating an example user interface in which the first path of a focus movement of FIG. 10 is implemented;

FIG. 12 is a diagram illustrating an example of an audio attribute determined according to a second path corresponding to a movement of a focus on a user interface including a 2D grid;

FIG. 13 is a diagram illustrating an example user interface in which the second path of a focus movement of FIG. 12 is implemented;

FIG. 14 is a diagram illustrating an example of an audio attribute determined according to a third path corresponding to a movement of a focus on a user interface including a 2D grid;

FIG. 15 is a diagram illustrating an example user interface in which the third path of a focus movement of FIG. 14 is implemented;

FIG. 16 is a flowchart illustrating an example process of determining an audio attribute according to a movement of a focus on a user interface including a three-dimensional (3D) grid, according to an example embodiment of the present invention;

FIG. 17 is an exploded perspective view illustrating an example 3D grid;

FIG. 18 is a diagram illustrating an example of a display device to which a user interface including a 3D grid is applied, according to an example embodiment of the present invention;

FIG. 19 is a diagram illustrating an example of an audio attribute determined according to a first path corresponding to a movement of a focus on a user interface including a 3D grid;

FIG. 20 is a diagram illustrating an example of adjusting an audio attribute according to a movement of a focus in the display device of FIG. 19;

FIG. 21 is a diagram illustrating an example of an audio attribute determined according to a second path corresponding to a movement of a focus on a user interface including a 3D grid;

FIG. 22 is a flowchart illustrating an example method of determining and outputting an audio attribute according to an attribute of an object on a live screen, according to an example embodiment of the present invention;

FIG. 23 is a diagram illustrating an example of a display device having an audio environment, according to an example embodiment of the present invention;

FIG. 24 is a diagram illustrating an example method of determining and outputting an audio attribute according to an attribute of an object on a live screen, according to an example embodiment of the present invention;

FIGS. 25A, 25B, 25C, 25D and 25E are diagrams illustrating example attributes of various objects on a live screen;

FIG. 26 is a flowchart illustrating an example method of controlling audio volume based on a movement signal of a control device, according to an example embodiment of the present invention;

FIG. 27 is a diagram illustrating an example of controlling audio volume based on a movement signal of a control device indicating a movement in a diagonal direction, according to an example embodiment of the present invention;

FIG. 28 is a diagram illustrating an example of controlling audio volume based on a movement signal indicating forward and backward inclinations of a control device, according to an example embodiment of the present invention; and

FIG. 29 is a diagram illustrating an example of controlling audio volume based on a signal indicating a swipe operation on a touch sensitive screen provided in a control device, according to an example embodiment of the present invention.

As the present invention allows for various changes and numerous embodiments, embodiments will be illustrated in the drawings and described in detail in the written description. However, this is not intended to limit the present invention to particular modes of practice, and it is to be appreciated that all changes, equivalents, and substitutes that do not depart from the scope of the present invention as defined by the claims are encompassed in the present invention. In the present disclosure, certain detailed explanations of the related art may be omitted when it is deemed that they may unnecessarily obscure the essence of the present disclosure.

The terms used in the present disclosure are merely used to describe embodiments, and are not intended to limit the present invention.

Reference will now be made in detail to devices according to various example embodiments, examples of which are illustrated in the accompanying drawings, wherein like reference numerals refer to like elements throughout.

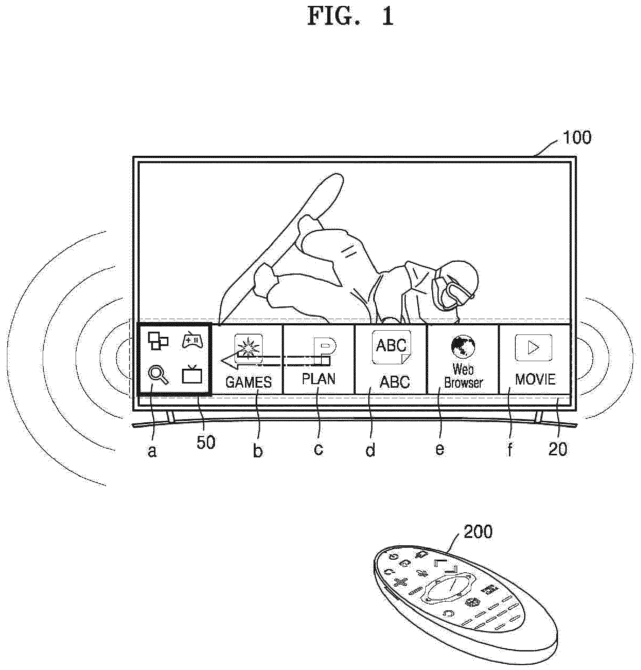

FIG. 1 is a reference diagram illustrating an example of the present invention according to an example embodiment.

Referring to FIG. 1, a display device 100 according to an embodiment may output a user interface 20 on a part of a display. The user interface 20 may display one or more items a through f. An item refers to an image displayed to provide content or information about the content. For example, content corresponding to a selected item may be reproduced by selecting the item for providing the content. For example, information about content corresponding to a selected item may be displayed by selecting the item for providing the information about the content. Although the items a through f are arranged in a line at the bottom of a screen in FIG. 1, the items a through f may be arranged on the screen in various ways.

A region moved and selected by a user manipulation in a user interface is referred to herein as a focus or a focus region. A user may move a focus on among a plurality of items included in the user interface 20 by using a control device 200. The focus may be moved by using two directional keys or four directional keys provided in the control device 200. The focus may also be moved by using a pointing signal of the control device 200 implemented as a pointing device. The focus may also be moved by using a touch signal of a touch pad included in the control device 200 including the touch pad. For example, the user may move the focus to the left in the user interface 20 by using a left directional key and may move the focus to the right in the user interface 20 by using a right directional key.

An item focused in the user interface 20 may be displayed by adding visual effects thereto representing that the focus is placed on the item. Referring to FIG. 1, the focused item a may be displayed by adding a highlight effect 50 around the item a. When the focus is moved by using the control device 200, since focus visual effects are also moved, the user may recognize which item is focused on.

The display device 100 according to an embodiment may output a sound feedback corresponding to a movement of the focus as well as adding focus visual effects to a focused item when moving the focus. For example, if the focus is moved left, a left sound volume may be turned up, and, if the focus is moved right, a right sound volume may be turned up.

As described above, the sound feedback may be provided, and thus visual effects and auditory effects may also be provided according to a movement of a focus, thereby providing a more intuitive experience of the movement of the focus.

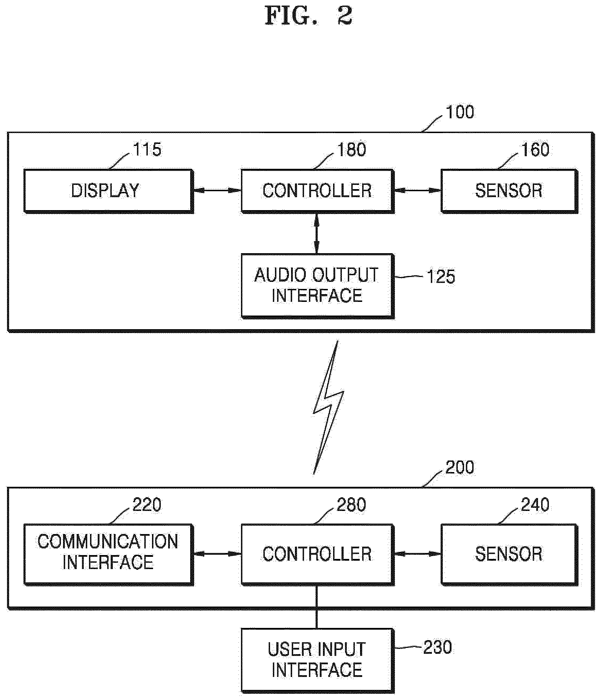

FIG. 2 is a block diagram illustrating examples of the display device 100 and the control device 200 according to an example embodiment of the present invention.

Referring to FIG. 2, the display device 100 may include a display 115, a controller (e.g., including processing circuitry) 180, a sensor 160, and an audio output interface (e.g., including audio output interface circuitry) 125. The display device 100 may be implemented as an analog television (TV), a digital TV, a three-dimensional (3D) TV, a smart TV, a light-emitting diode (LED) TV, an organic light-emitting diode (OLED) TV, a plasma TV, a monitor, a set-top box, or the like, but is not limited thereto.

The display 115 may display content. The content may include video, audio, images, game, applications, etc. The content may be received through a satellite broadcast signal, an Internet protocol TV (IPTV) signal, a video-on-demand (VOD) signal, or a signal received by giving access to the Internet such as YouTube, etc.

The audio output interface 125 may include various audio output interface circuitry that output audio and sound feedback under control of the controller 180.

The sensor 160 may sense a control signal corresponding to a movement of a focus from the controller device 200.

The controller 180 may include various processing circuitry and may, for example, be configured as one or more processors to generally control components of the display device 100.

The controller 180 according to an embodiment may receive the control signal to move the focus in a user interface displayed on the display 115 and may control the audio output interface 125 to output the sound feedback in correspondence to the movement of the focus.

The controller 180 according to an embodiment may control the audio output interface 125 to output the sound feedback according to an attribute of an object moving in content reproduced in the display 115 or an attribute of the content.

The controller 180 according to an embodiment may receive a control signal indicating a movement of the control device 200 and accordingly control the audio output interface 125 to adjust a volume of the content reproduced in the display 115.

The control device 200 may include a communication interface (e.g., including communication interface circuitry) 220, a controller (e.g., including processing circuitry) 280, a user input interface (e.g., including user interface circuitry) 230, and a sensor 240.

The communication interface 220 may include various communication circuitry and transmit a user input signal or a sense signal of the control device 200 to the display device 100.

The sensor 240 may sense a movement of the control device 200.

The user input interface 230 may include various input circuitry, such as, for example, and without limitation, directional keys, buttons, a touch pad, etc. to receive a user input.

The controller 280 may include various processing circuitry and generally control components of the control device 200.

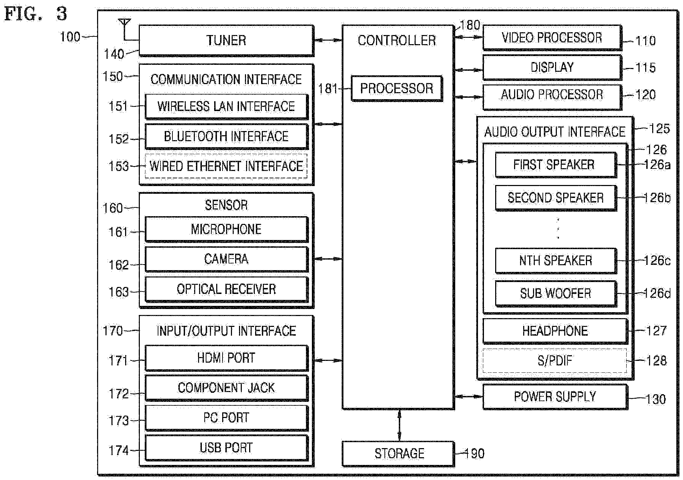

FIG. 3 is a block diagram illustrating an example of the display device 100 of FIG. 2.

Referring to FIG. 3, the display device 100 may include a video processor (e.g., including video processing circuitry) 110, the display 115, an audio processor (e.g., including audio processing circuitry) 120, the audio output interface 125, a power supply 130, a tuner 140, the communication interface 150, the sensor 160, an input/output interface (e.g., including interface circuitry) 170, the controller 180, and a storage 190.

The video processor 110 may include various processing circuitry and process video data received by the display device 100. The video processor 110 may perform various types of image processing, such as decoding, scaling, noise filtering, frame rate conversion, and resolution conversion, on the video data.

The display 115 may display video included in a broadcast signal received through the tuner 140 on a screen under control of the controller 180. The display 115 may also display content (e.g., a moving image) input through the communication interface 150 or the input/output interface 170. The display 115 may display an image stored in the storage 190 under control of the controller 180.

According to an embodiment, the display 115 may output a user interface including a two-dimensional (2D) grid and may move a focus corresponding to a user input on the 2D grid consisting of x and y axes.

According to an embodiment, the display 115 may output a user interface including a 3D grid and may move a focus corresponding to a user input on the 3D grid consisting of x, y, and z axes.

The audio processor 120 may include various processing circuitry and process audio data. The audio processor 120 may perform various types of processing, such as decoding, amplification, and noise filtering, on the audio data.

According to an embodiment, the audio processor 120 may perform at least one of transposition processing, reverb processing, etc. according to a movement of a focus on a 2D grid user interface or a 3D user interface.

The audio output interface 125 may output audio included in the broadcast signal received through the tuner 140 under control of the controller 180. The audio output interface 125 may output audio (e.g., a voice or sound) input through the communication interface 150 or the input/output interface 170. The audio output interface 125 may output audio stored in the storage 190 under control of the controller 180. The audio output interface 125 may include at least one of a multi speaker 126 including a first speaker 126a, a second speaker 126b, ..., an Nth speaker 126c, and a sub woofer 126d, a headphone output terminal 127, and a Sony/Philips digital interface (S/PDIF) output terminal 128.

According to an embodiment, the audio output interface 125 may output a sound feedback having at least one of the multi speaker 126 and at least one of transpose, reverb, and equalizer adjusted according to a movement of a focus on a 2D grid user interface or a 3D user interface.

According to an embodiment, the audio output interface 125 may output audio having an attribute determined according to an attribute of content output on the display 115 or an attribute of an object included in the content.

According to an embodiment, the audio output interface 125 may output audio having adjusted a master volume of content reproduced in the display 115 in correspondence to a movement signal of the control device 200.

The power supply 130 may supply power input from an external power source to the internal components 110 through 190 of the display device 100 under control of the controller 180. The power supply 130 may supply power input from one or more batteries located inside the display device 100 to the internal components 110 through 190 under control of the controller 180.

The tuner 140 may receive the broadcast signal in a frequency band corresponding to a channel number according to a user input (e.g., a control signal received from the control device 200, for example, a channel number input, a channel up-down input, and a channel input on an electronic program guide (EPG) screen image).

The tuner 140 may receive broadcast signals from various sources such as a terrestrial broadcast, a cable broadcast, a satellite broadcast, an Internet broadcast, etc. The tuner 140 may also receive a broadcast signal from a source such as an analog broadcast or a digital broadcast, etc. The broadcast signals received through the tuner 140 may be decoded, for example, audio-decoded, video-decoded, or additional information-decoded, into audio, video, and/or additional information. The split audio, video, and/or additional information may be stored in the storage 190, under the control of the controller 180.

The tuner 140 may be embodied as an all-in-one type with the display device 100 or as a separate apparatus having a tuner electrically connected to the display device 100, for example, a set-top box (not shown) or a tuner (not shown) connected to the input/output interface 170.

The communication interface 150 may include various communication circuitry configured to connect the display device 100 to external apparatuses, for example, an audio apparatus, under the control of the controller 180. The controller 180 may transmit/receive content with respect to the external apparatuses connected via the communication interface 150, download applications from the external apparatuses, or enable web browsing. The communication interface 150 may include various communication circuitry, such as, for example, and without limitation, one or more of a wireless local area network (LAN) interface 151, a Bluetooth interface 152, and a wired Ethernet interface 153 according to the performance and structure of the display device 100. Also, the communication interface 150 may include a combination of the wireless LAN interface 151, the Bluetooth interface 152, and the wired Ethernet interface 153. The communication interface 150 may receive the control signal of the control device 200, under the control of the controller 180. The control signal may be embodied as a Bluetooth signal, a radio frequency (RF) signal, or a WiFi signal.

The communication interface 150 may further include other short-distance communication interfaces (e.g., a near-field communication (NFC) interface (not shown) and a Bluetooth low energy (BLE) interface (not shown)) besides the Bluetooth interface 152.

The sensor 160 may sense a voice of the user, an image of the user, or an interaction of the user.

A microphone 161 may receive a voice uttered by the user. The microphone 161 may convert the received voice into an electrical signal and output the converted electrical signal to the controller 180.

A camera 162 may receive an image (e.g., continuous frames) corresponding to a motion of the user including a gesture within a camera recognition range. The motion of the user may include, for example, motion using any body part of the user, such as the face hands, feet, etc., and the motion may be, for example, a change in facial expression, curling the fingers into a fist, spreading the fingers, etc. The camera 162 may convert the received image into an electrical signal and output the converted electrical signal to the controller 180 under control of the controller 180.

The controller 180 may select a menu displayed on the display device 100 by using a recognition result of the received motion or perform a channel adjustment, a volume adjustment, or a movement of an indicator corresponding to the motion recognition result.

The camera 162 may include a lens and an image sensor. The camera 162 may support optical zoom or digital zoom by using a plurality of lenses and image processing.

An optical receiver 163 may receive an optical signal (including a control signal) received from the control device 200 through an optical window (not shown) of a bezel of the display 115. The optical receiver 163 may receive the optical signal corresponding to a user input (e.g., a touch, a push, a touch gesture, a voice, or a motion) from the control device 200. The control signal may be extracted from the received optical signal under control of the controller 180.

According to an embodiment, the optical receiver 163 may receive a signal corresponding to a pointing location of the control device 200 and may transmit the signal to the controller 180. For example, if a user moves the control device 200 while touching a touch pad 203 provided in the control device 200 with his/her finger, the optical receiver 163 may receive a signal corresponding to a movement of the control device 200 and may transmit the signal to the controller 180.

According to an embodiment, the optical receiver 163 may receive a signal indicating that a specific button provided in the control device 200 is pressed and may transmit the signal to the controller 180. For example, if the user presses the button type touch pad 203 provided in the control device 200 with his/her finger, the optical receiver 163 may receive a signal indicating that the button type touch pad 203 is pressed and may transmit the signal to the controller 180. For example, the signal indicating that the button type touch pad 203 is pressed may be used as a signal for selecting one of the items displayed.

According to an embodiment, the optical receiver 163 may receive a signal corresponding to a directional key input of the control device 200 and may transmit the signal to the controller 180. For example, if the user presses a directional key button 204 provided in the control device 200, the optical receiver 163 may receive a signal indicating that the directional key button 204 is pressed and may transmit the signal to the controller 180.

According to an embodiment, the optical receiver 163 may receive a signal corresponding to a movement of the control device 200 and may transmit the signal to the controller 180.

The input/output interface 170 may include various interface circuitry and receive video (e.g., a moving picture, etc.), audio (e.g., a voice or music, etc.), and additional information (e.g., an EPG, etc.), and the like from the outside of the display device 100 under control of the controller 180. The input/output interface 170 may include various interface circuitry, such as, for example, and without limitation, one or more of a high definition multimedia interface (HDMI) port 171, a component jack 172, a personal computer (PC) port 173, and a universal serial bus (USB) port 174. The input/output interface 170 may include a combination of the HDMI port 171, the component jack 172, the PC port 173, and the USB port 174.

It will be easily understood by one of ordinary skill in the art that a configuration and operation of the input/output interface 170 may be variously implemented according to embodiments.

The controller 180 may include various processing circuitry and control a general operation of the display device 100 and a signal flow between the internal components 110 through 190 of the display device 100 and process data. If a user input exists, or a preset and stored condition is satisfied, the controller 180 may execute an operating system (OS) and various applications stored in the storage 190.

The controller 180 may include various processing circuitry, such as, for example, and without limitation, a processor 181. Further, the controller 180 may include a random-access memory (RAM) used to store a signal or data input from the outside of the display device 100 or used as a storage region corresponding to various operations performed by the display device 100, or a read-only memory (ROM) in which a control program for controlling the display device 100 is stored.

The processor 181 may include a graphics processing unit (GPU) (not shown) for processing graphics corresponding to video. The processor may be implemented by a system on a chip (SoC) in which a core (not shown) and a GPU (not shown) are integrated. The processor may also include a single core, a dual core, a triple core, a quad core, and a multiple core.

The processor 181 may also include a plurality of processors. For example, the processor may be implemented as a main processor (not shown) and a sub processor (not shown) operating in a sleep mode.

The controller 180 may receive pointing location information of the control device 20 through at least one of the optical receiver 163 and a panel key (not shown) located in one of side and rear surfaces of the display device 100.

According to an embodiment, the controller 180 may detect a control signal from the control device 200 moving a focus in a user interface, may determine an attribute of audio according to a location of the focus corresponding to the control signal, and may control the audio output interface 125 to output a sound feedback having the determined audio attribute. In this regard, the audio attribute may include at least one of volume balance expressing a top speaker, a bottom speaker, a left speaker, a right speaker, a front speaker, or a rear speaker, transposition, reverb, and equalization (EQ).

According to an embodiment, the controller 180 may determine an audio attribute by using at least one of volumes and transpositions of at least two speakers according to a location of a focus in a user interface including a 2D grid.

According to an embodiment, the controller 180 may determine a volume of the left speaker or the right speaker according to an x axis location of the focus in the 2D grid and may determine a transpose value according to a y axis location of the focus in the 2D grid.

According to an embodiment, the controller 180 may determine the audio attribute by using at least one of volumes, transpositions, and reverbs of at least two speakers according to a location of a focus in a user interface including a 3D grid.

According to an embodiment, the controller 180 may determine a volume of the left speaker or the right speaker according to the x axis location of the focus in the 3D grid, may determine a transpose value according to the y axis location of the focus in the 3D grid, and may determine a reverb value according to the x axis location of the focus in the 3D grid.

According to an embodiment, the controller 180 may determine an audio attribute based on at least one of a location of an object moving in content reproduced in a live screen, a color distribution in the live screen, contrast, illumination, and a change in the number of frames.

According to an embodiment, the controller 180 may determine a volume of the left speaker or the right speaker according to an x axis location of the object on the live screen, may determine a volume of the top speaker or the bottom speaker according to a y axis location of the object on the live screen, and may determine a reverb value according to the y axis location of the object on the live screen.

According to an embodiment, the controller 180 may detect a movement signal from the control device 200, may determine a volume of audio included in visual content according to the movement signal, and may control the audio output interface 125 to output the audio with the determined volume. In this regard, the movement signal of the control device 200 may include at least one of a signal indicating a movement of the control device 200 in a diagonal direction with respect to the display 115, a signal indicating a movement of the control device 200 inclining forward and backward, and a swipe signal on a touch sensitive screen provided in the control device 200.

It will be easily understood by one of ordinary skill in the art that a configuration and operation of the controller 180 may be variously implemented according to embodiments.

The storage 190 may store various data, programs, or applications for operating and controlling the display device 100 under control of the controller 180. The storage 190 may store signals or data input/output in correspondence with operations of the video processor 110, the display 115, the audio processor 120, the audio output interface 125, the power supply 130, the tuner 140, the communication interface 150, the sensor 160, and the input/output interface 170. The storage 190 may store control programs for controlling the display device 100 and the controller 180, applications initially provided from a manufacturer or downloaded from the outside, graphic user interfaces (GUIs) related to the

**EP 3 217 651 A2**

applications, objects (e.g., images, text, icons, and buttons) for providing the GUIs, user information, documents, databases (DBs), or related data.

The storage 290 may also include a nonvolatile memory, a volatile memory, a hard disk drive (HDD), or a solid-state drive (SSD).

The storage 190 may include a broadcast receiving module, a channel control module, a volume control module, a communication control module, a voice recognition module, a motion recognition module, a light receiving module, a display control module, an audio control module, an external input control module, a power control module, a power control module of an external apparatus connected in a wireless manner, for example, Bluetooth, a voice database (DB), or a motion DB, which are not illustrated in the drawings. The modules that are not illustrated and the DB of the storage 190 may be implemented in a software manner in order to perform a broadcast receiving control function, a channel control function, a volume control function, a communication control function, a voice recognition function, a motion recognition function, a light receiving function, a display control function, an audio control function, an external input control function, a power control function, and a display control function to control a display of a cursor or a scrolling item in the display device 100. The controller 180 may perform each function by using the software stored in the storage 190.

According to an embodiment, the storage 190 may store an image corresponding to each item.

According to an embodiment, the storage 190 may store an image corresponding to a cursor that is output in correspondence to a pointing location of the control device 200.

According to an embodiment, the storage 190 may store a graphic image to provide focus visual effects given to items in correspondence to a directional key input of the control device 200.

The storage 190 may store a moving image or an image corresponding to a visual feedback.

The storage 190 may store sound corresponding to an auditory feedback.

The storage 190 may include a presentation module. The presentation module may be a module for configuring a display screen. The presentation module may include a multimedia module for reproducing and outputting multimedia content and a UI rendering module for performing a UI function and graphic processing. The multimedia module may include a player module, a camcorder module, a sound processing module, etc. Accordingly, the multimedia module may perform an operation of reproducing various kinds of multimedia content and generating and reproducing a screen and sound. The UI rendering module may include an image compositor module composing images, a coordinate compositor module composing and generating coordinates on a screen on which an image is to be displayed, an X11 module receiving various events from hardware, a 2D/3D UI toolkit providing a tool for configuring a 2D or 3D UI, etc.

According to an embodiment, the storage 190 may include a module storing one or more instructions outputting a sound feedback in which an audio attribute is determined according to a movement of a focus in a 2D or 3D grid user interface.

Also, the display device 100 including the display 115 may be electrically connected to a separate external device (for example, a set-top box (not shown)) having a tuner. For example, the display device 100 may be implemented as an analog TV, a digital TV, a 3D TV, a smart TV, an LED TV, an OLED TV, a plasma TV, a monitor, a set-top box, etc. but it will be apparent to one of ordinary skill in the art to which the present disclosure pertains that the display device 100 is not limited thereto.

The display device 100 may include a sensor (for example, an illumination sensor, a temperature sensor, etc. (not shown)) sensing an internal or external state thereof.

At least one component may be added to or deleted from the components (for example, 110 through 190) shown in the display device 100 of FIG. 3 according to a performance of the display device 100. Also, it will be easily understood by one of ordinary skill in the art that locations of the components (for example, 110 through 190) may be changed according to the performance or a structure of the display device 100.

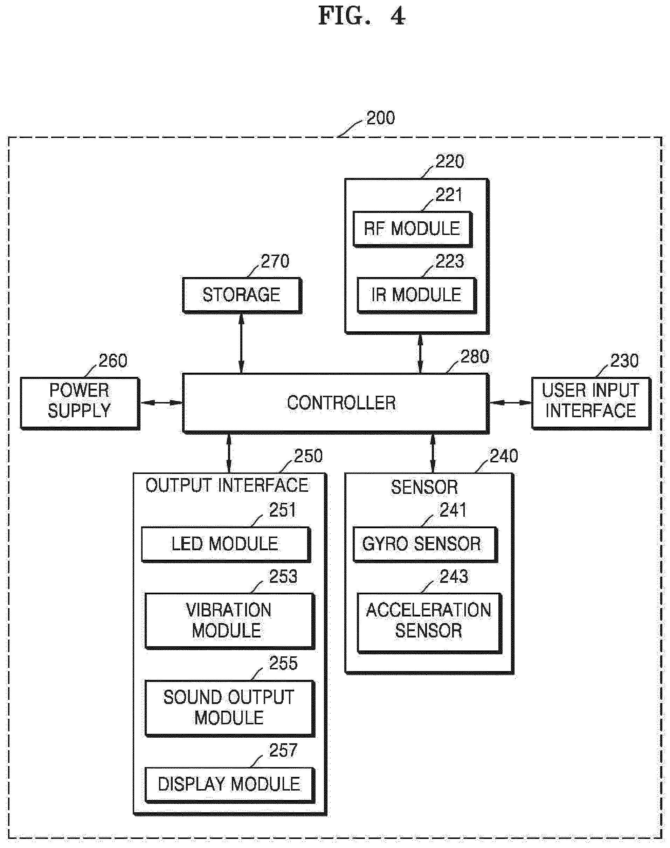

FIG. 4 is a block diagram illustrating an example of the control device 200 of FIG. 2.

Referring to FIG. 4, the control device 200 may include a wireless communication interface (e.g., including communication circuitry) 220, a user input interface (e.g., including input interface circuitry) 230, a sensor 240, an output interface (e.g., including output interface circuitry) 250, a power supply 260, a storage 270, and a controller (e.g., including processing circuitry) 280.

The wireless communication interface 220 may include various communication circuitry configured to transmit and receive a signal to and from the display device 100 according to the embodiments described above. The wireless communication interface 220 may include an RF module 221 that transmits and receives the signal to and from the display device 100 according to an RF communication standard. The control device 200 may include an infrared (IR) module 223 that transmits and receives the signal to and from the display device 100 according to the RF communication standard. The wireless communication interface 220 may also include an IR module 223 that transmits and receives the signal to and from the display device 100 according to an IR communication standard.

According to an embodiment, the control device 200 may transmit a signal including information regarding a motion of the control device 200 to the display device 100 through the RF module 221.

The control device 200 may receive a signal transmitted by the display device 100 through the RF module 221. The control device 200 may transmit a command regarding a power on/off, a channel change, a volume change, etc. to the display device 100 through the IR module 223 if necessary.

The user input interface 230 may include various input circuitry, such as, for example, and without limitation a keypad, a button, a touch pad, or a touch screen, etc. A user may manipulate the user input interface 230 to input a command related to the display device 100 to the control device 200. When the user input interface 230 includes a hard key button, the user may input the command related to the display device 100 to the control device 200 through a push operation of the hard key button. When the user input interface 230 includes the touch screen, the user may touch a soft key of the touch screen to input the command related to the display device 100 to the control device 200.

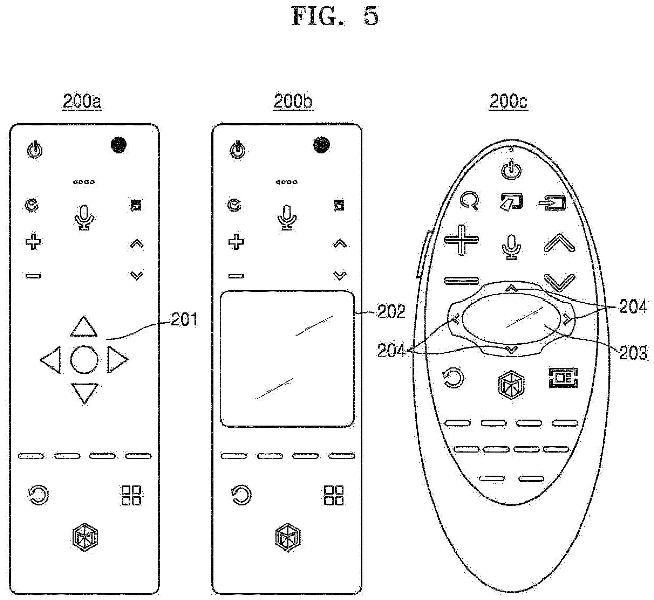

For example, the user input interface 230 may include 4 direction buttons or 4 direction keys 201 like a control device 200a of FIG. 5. The 4 direction buttons or the 4 direction keys may be used to control a window, a region, an application, or an item that are displayed on the display 115. The 4 direction buttons or the 4 direction keys may be used to indicate up, down, left, and right movements. It will be easily understood by one of ordinary skill in the art that the user input interface 230 may include 2 direction buttons or 2 direction keys or 8 direction buttons or 8 direction keys, instead of the 4 direction buttons or the 4 direction keys.

According to an embodiment, the 4 direction buttons or 4 direction keys 201 may be used to move a focus of an item in a user interface provided to the display 115.

Also, the user input interface 230 may include a touch pad 202 like a control device 200b of FIG. 5. According to an embodiment, the user input interface 230 may receive a user input that drags, touches, or flips, through the touch pad of the control device 200. The display device 100 may be controlled according to a type of the received user input (for example, a direction in which a drag command is input, a time point when a touch command is input, etc.)

The sensor 240 may include a Gyro sensor 241 or an acceleration sensor 243. The Gyro sensor 241 may sense information regarding the movement of the control device 200. As an example, the Gyro sensor 241 may sense information regarding an operation of the control device 200 in relation to X, Y, and Z axes. The acceleration sensor 243 may sense information regarding a movement speed of the control device 200. Meanwhile, the sensor 240 may further include a distance measurement sensor, and thus a distance between the control device 200 and the display device 100 may be sensed.

Referring to FIG. 5, a control device 200c according to an embodiment may be implemented as a pointing device including both the 4 directional key 204 and the touch pad 203. That is, when the control device 200c is implemented as the pointing device, a function of the display device 100 may be controlled according to an inclining direction or angle, etc. by using the Gyro sensor 241 of the control device 200.

According to an embodiment, a selection signal of the 4 directional key 204 may be used to move a focus of an item displayed on an item region provided to the display 115.

The output interface 250 may include various output circuitry and output an image or voice signal corresponding to a manipulation of the user input interface 230 or corresponding to the signal received from the display device 100. The user may recognize whether the user input interface 230 is manipulated or whether the display device 100 is controlled through the output interface 250.

As an example, the output interface 250 may include various output circuitry, such as, for example, and without limitation, an LED module 251 that lights on if the user input interface 230 is manipulated or a signal is transmitted to or received from the display device 100 though the wireless communication interface 220, a vibration module 253 that generates a vibration, a sound output module 255 that outputs sound, or a display module 257 that outputs an image.

The power supply 260 may supply power to the control device 200. The power supply 260 may stop supplying power when the control device 200 does not move for a certain period of time, thereby reducing power waste. The power supply 260 may resume supplying power when a certain key included in the control device 200 is manipulated.

The storage 270 may store various types of programs, application data, etc. necessary for control or for an operation of the control device 200.

The controller 280 may include various processing circuitry and control everything related to control of the control device 200. The controller 280 may transmit a signal corresponding to a manipulation of a certain key of the user input interface 230 or a signal corresponding to a movement of the control device 200 sensed by the sensor 240 to the display device 100 through the wireless communication interface 220.

The display device 100 may include a coordinate value calculator (not shown) that calculates a coordinate value of a cursor corresponding to an operation of the control device 200.

The coordinate value calculator (not shown) may correct a hand shake or an error from the sensed signal corresponding to the operation of the control device 200 to calculate the coordinate value (x, y) of the cursor that is to be displayed on the display 115.

Also, a transmission signal of the control device 200 sensed by the sensor 130 may be transmitted to the controller 180 of the display device 100. The controller 280 may determine information regarding the operation of the control device 200 and a key manipulation from the signal transmitted by the control device 200 and may control the display device 100 in correspondence with the information.

As another example, the control device 200 may calculate a coordinate value of the cursor corresponding to the operation to transmit the coordinate value to the display device 100. In this case, the display device 100 may transmit received information regarding a pointer coordinate value without a separate process of correcting the hand shake or the error to the controller 280.

According to an embodiment, a user may control a location of a cursor displayed on a screen of a display or a focus and select an image by using a directional key, a touch pad, a pointing function, etc. of the control device 200.

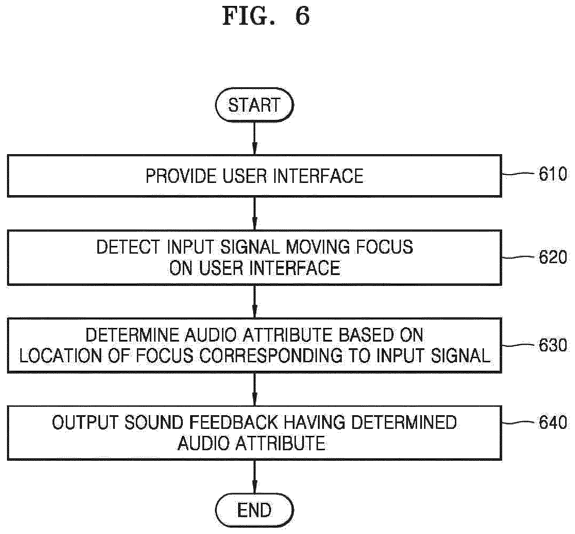

FIG. 6 is a flowchart illustrating an example operation process of a display device, according to an example embodiment of the present invention.

Referring to FIG. 6, in operation 610, the display device may provide a user interface corresponding to at least one video environment. The user interface corresponding to the at least one video environment may include a 2D grid user interface or a 3D grid user interface.

In operation 620, the display device may detect a movement signal of a control device moving a focus on the user interface. The control device including directional keys may move the focus by a user input that selects a directional key. The control device including a touch pad may move the focus by a user input on the touch pad. A pointing device including a Gyro sensor, etc. may move the focus by a user input that moves the pointing device. The display device may detect a directional key selection signal of the control device, a touch input signal of the touch pad, and a movement signal of the pointing device.

In operation 630, the display device may determine an audio attribute based on a location of the focus corresponding to the movement signal.

According to an embodiment, the display device may obtain a location configured as an x axis coordinate and a y axis coordinate as the location of the focus corresponding to the movement signal of the control device from the 2D grid user interface.

According to an embodiment, the display device may obtain a location configured as an x axis coordinate, a y axis coordinate, and a y axis coordinate as the location of the focus corresponding to the movement signal of the control device from the 3D grid user interface.

According to an embodiment, the audio attribute may include at least one of a volume balance, transposition, reverb, and EQ expressing the attributes of one or more speakers. The one or more speakers may include a top speaker, a bottom speaker, a left speaker, a right speaker, a front speaker, and a rear speaker.

According to various embodiments, the audio attribute may be determined according to the location of the focus.

In operation 640, the display device may control an audio output interface to output a sound feedback having the determined audio attribute.

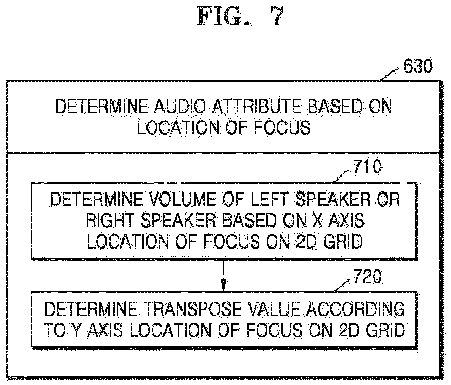

FIG. 7 is a flowchart illustrating an example process of determining an audio attribute according to a movement of a focus on a user interface including a 2D grid, according to an example embodiment of the present invention.

Referring to FIG. 7, in operation 710, a display device may determine volume of a left speaker or a right speaker based on an x axis location of the focus on the user interface including the 2D grid. For example, the display device may volume up the left speaker if the focus is close to a left side on an x axis and may volume down the right speaker if the focus is close to a right side on the x axis.

In operation 720, the display device may determine a transpose value based on a y axis location of the focus on the user interface including the 2D grid. For example, the display device may reduce the transpose value if the focus is close to a lower portion on a y axis and may increase the transpose value if the focus is close to an upper portion on the y axis.

Transposition may refer, for example, to a process of raising or lowering the pitch of a collection of notes up or down.

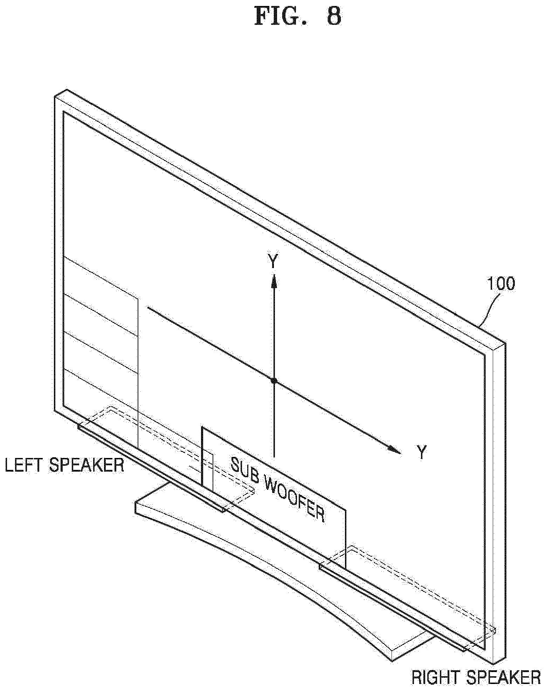

FIG. 8 is a diagram illustrating an example of a display device having a user interface including a 2D grid and an audio environment, according to an example embodiment of the present invention.

Referring to FIG. 8, the display device 100 may include a left speaker, a right speaker, and a sub woofer. Also, the display device may provide the user interface including the 2D grid. The 2D grid refers to a specification including x coordinates and y coordinates for an objective with respect to a target and visual stability of components included in a user interface. A transparent and thin layer on a live screen is spatially and functionally identified from the live screen, wherein a user manipulation in the layer includes top/bottom/left/right/diagonal movements.

According to an embodiment, as illustrated in FIG. 8, a sound feedback generated when a focus moves on the user interface including the 2D grid may be output so as to allow the user sense directionality.

Gains, e.g., volumes, of the left speaker and the right speaker may be adjusted according to x coordinates on the 2D grid. Transpose values of the left speaker and the right speaker may be adjusted according to y coordinates on the 2D grid.

According to an embodiment, a sound feedback corresponding to a location of the focus on the user interface including the 2D grid may be defined as follows:

[Equation 1]

$$\text{Sound output (Left gain, Right gain, Transpose)} = (100\text{-}x, x, y)$$

It is assumed that a range of a coordinate value is $0 \leq x \leq 100$, and $0 \leq y \leq 100$, the Left Gain denotes the volume of the left speaker, the Right Gain denotes the volume of the right speaker, and the Transpose denotes transposition like C→C#→D→D#.

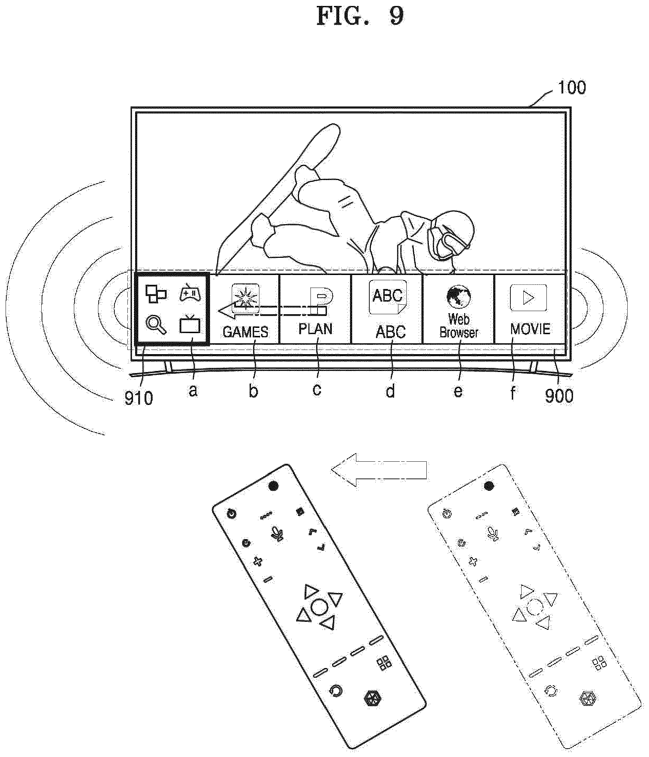

FIG. 9 is a diagram illustrating an example of adjusting an audio attribute according to a movement of a focus 910 in the display device 100 of FIG. 8.

Referring to FIG. 9, the display device 100 may output a user interface 900 including a plurality of items a, b, c, d, e, and f on a part of a screen. The display device 100 may receive a movement signal of the control device 200 and move the focus 910 to a location corresponding to the movement signal. In FIG. 9, the focus 910 is moved from a center to a left side. As described above, if a focus is moved to a left side on a user interface including a 2D grid, a display device may increase the volume of a left speaker so that a user may visually and audibly sense a movement of the focus.

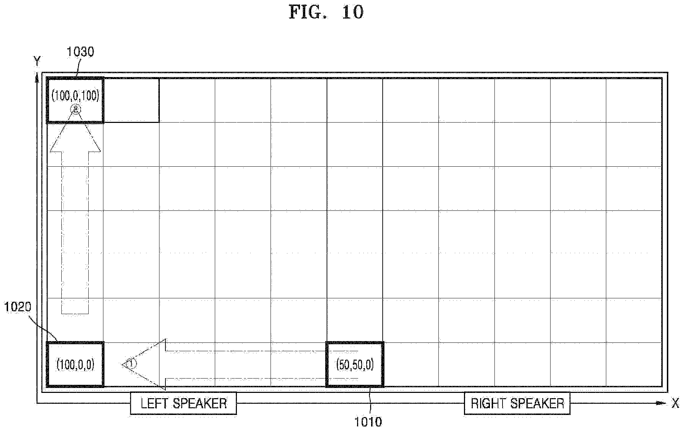

FIG. 10 is a diagram illustrating an example of an audio attribute determined according to a first path corresponding to a movement of a focus on a user interface including a 2D grid.

According to an embodiment, a sound feedback corresponding to a location of the focus on the user interface including the 2D grid may be defined as follows:

[Equation 1]

$$\text{Sound output (Left gain, Right gain, Transpose)} = (100\text{-}x, x, y)$$

It is assumed that a range of a coordinate value is $0 \leq x \leq 100$, and $0 \leq y \leq 100$.

Referring to FIG. 10, a coordinate $(x,y)$ of a center location 1010 of a screen of a display device is (50, 0). When the focus is at the coordinate 1010, a sound output may be (50, 50, 0) according to Equation 1 above. In FIG. 10, (50, 50, 0) at a focus of the center location 1010 denotes the sound output when the focus is at the coordinate. Sound output (Left gain, Right gain, Transpose) = (50, 50, 0) means that a gain of a left speaker is 50, a gain of a right speaker is 50, and a transpose value is o. That is, when the focus is at a lower center of the screen of the display device, both the left speaker and the right speaker may output an intermediate value as the same volume, and the transpose value may be output as o.

If a user moves the focus from a display center to a left edge, the coordinate $(x, y)$ of a left edge location 1020 may be (0, 0), and a sound output of the left edge location 1020 may be (100, 0, 0). That is, if the focus is moved from the center to the left edge, a volume of the left speaker may be maximum, and a volume of the right speaker may be minimum so that the user may sense the sound output from the center of the display device to the left thereof.

If the user moves the focus from a display bottom left to a display top left 1030, the sound output may be (100, 0, 100), and thus sound transposed by a y coordinate of the movement may be output from the left speaker while the volume of the left speaker is the same.

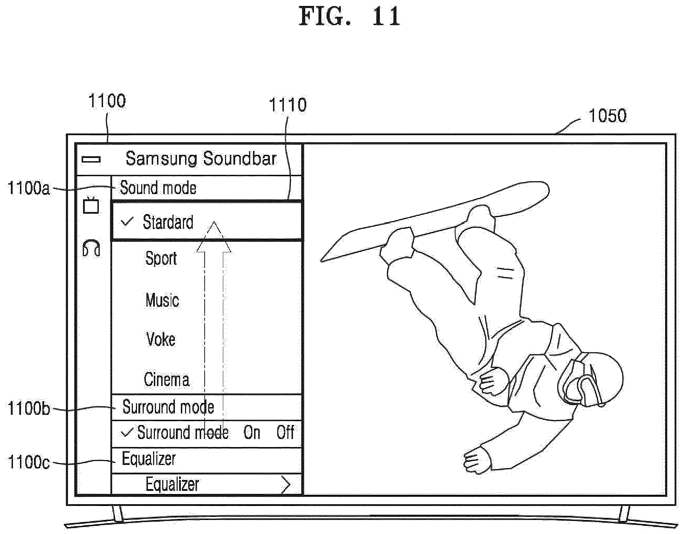

FIG. 11 is a diagram illustrating an example user interface 1100 in which a path of a focus movement of FIG. 10 is implemented.

FIG. 11 illustrates the user interface 1100 on which a focus of FIG. 10 may be moved from a bottom left to a top left. Referring to FIG. 11, the display device 100 may output a user interface 1100 including a plurality of items for setting sound on a left side of a screen of the display 1050. The user interface 1100 may include, for example, one or more items for setting a sound mode 1100a such as standard, sport, music, voke, and cinema, an item for setting a surround mode 1100b, and an item for selecting an equalizer 1100c. A user may move a focus on the plurality of items included in a user interface 1110. As described above, as the user moves the focus from a bottom end to a top end on the user interface 1110, the user may experience a sound feedback having an increasing transpose value of a left speaker.

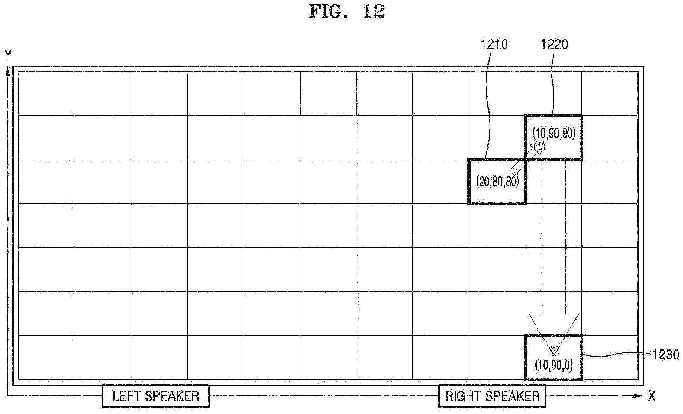

FIG. 12 is a diagram illustrating an example of an audio attribute determined according to a second path corresponding to a movement of a focus on a user interface including a 2D grid.

Referring to FIG. 12, a coordinate $(x, y)$ of a location 1210 of a screen of a display device is (80, 80), and thus a sound output of the location 1210 may be (20, 80, 80). When the focus is moved from the location 1210 to a location 1220, the sound output may be adjusted to (10, 90, 90). When the focus is moved again from the location 1220 to a location 1230, the sound output may be adjusted to (10, 90, 0).

Thus, for example, when a user moves the focus along a path as shown in FIG. 12, the user may experience a sound feedback having a high transposition and then a sound feedback having a low transposition.

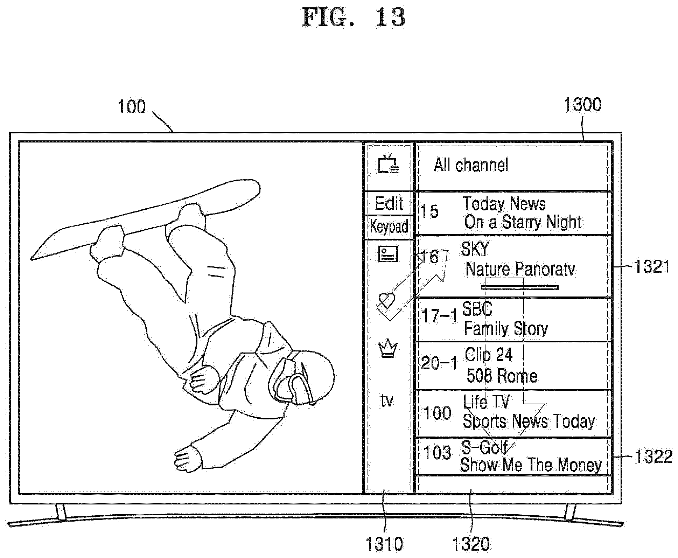

FIG. 13 is a diagram illustrating an example user interface in which a second path of a focus movement of FIG. 12 is implemented.

Referring to FIG. 13, the display device 100 may display a user interface 1300 displaying channel information on a right side of a screen.

The user interface 1300 may display a plurality of selectable items according to classifications providing the channel information on a first column 1310 and may display a plurality of items indicating channels on a second column 1320.

A user may move the focus on the plurality of items included in the user interface 1300. As described above, when the user moves the focus from the first column 1310 to a second location 1321 of the second column 1320 on the user interface 1300, the user may experience a sound feedback in which a sound output of a right speaker and a transpose value thereof are further increased. Also, when the user moves the focus from the second location 1321 of the second column 1320 to a third location 1322 of the second column 1320 on the user interface 1300, the user may experience a sound feedback in which the transpose value of the right speaker is reduced.

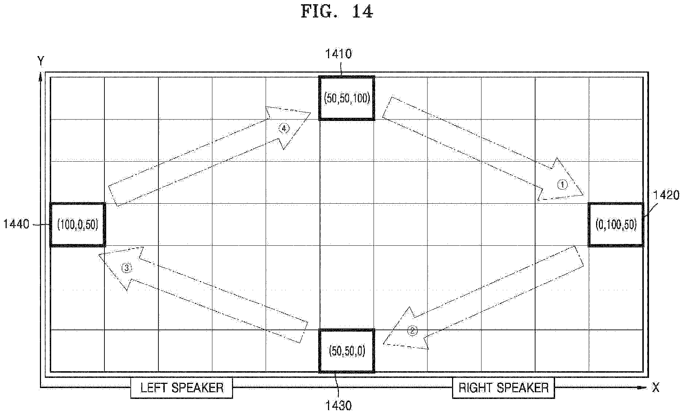

FIG. 14 is a diagram illustrating an example of an audio attribute determined according to a third path corresponding to a movement of a focus on a user interface including a 2D grid.

Referring to FIG. 14, a coordinate (x, y) of a location 1410 of a screen of a display device is (50, 100), and thus a sound output of the location 1410 may be (50, 50, 100) according to a definition of an Equation above. When the focus is moved from the location 1410 to a location 1420, the sound output may be adjusted to (o, 100, 50). When the focus is moved again from the location 1420 to a location 1430, the sound output may be adjusted to (50, 50, 0). When the focus is moved again from the location 1430 to a location 1440, the sound output may be adjusted to (100, 0, 50). When the focus is moved again from the location 1440 to the location 1410, the sound output may be adjusted to (50, 50, 100).

Thus, when a user moves the focus, for example, according to a path as indicated in FIG. 14, the user may sense a sound output that feels generally to be moving in a direction of center -> right -> left -> center. Also, the user may sense a transposition that feels to be moving in a direction of high -> middle -> low -> middle - > high.

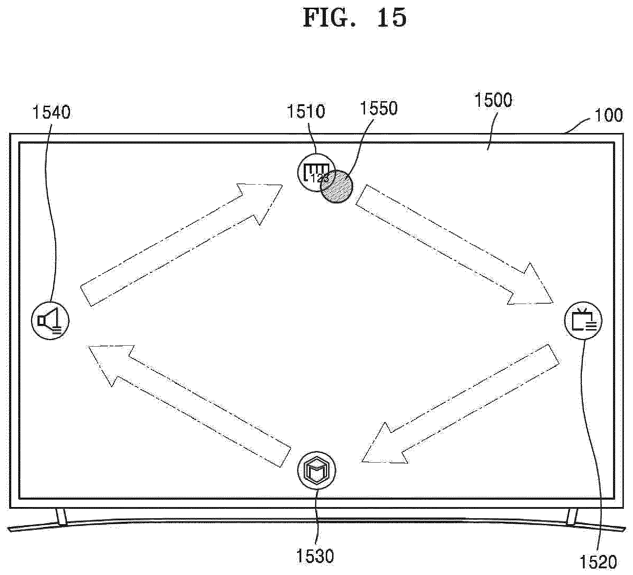

FIG. 15 is a diagram illustrating an example user interface 1500 in which the third path of a focus movement of FIG. 14 is implemented.

Referring to FIG. 15, the display device 100 may display the user interface 1500 displaying an item on a center of each edge of a screen.

The user interface 1500 may include an item 1510 for selecting global functions on a center of a top end of the screen, an item 1520 for displaying a channel list on a center of a right edge of the screen, an item 1530 for selecting featured items in a center of a bottom edge of the screen, and an item 1540 for displaying a speaker list on a center of a right edge of the screen.

A user may move the focus 1550 on the items 1510 through 1540 included in the user interface 1500. As described above, when the user moves the focus on the items 1510 through 1540 of the user interface 1500 clockwise, the user may experience a sound output that feels moving clockwise.

Also, a sound feedback may provide the user with clear recognition and learning with respect to a currently manipulated status. For example, in FIG. 15, the user may recognize left sound as the speaker list and right sound as the channel list.

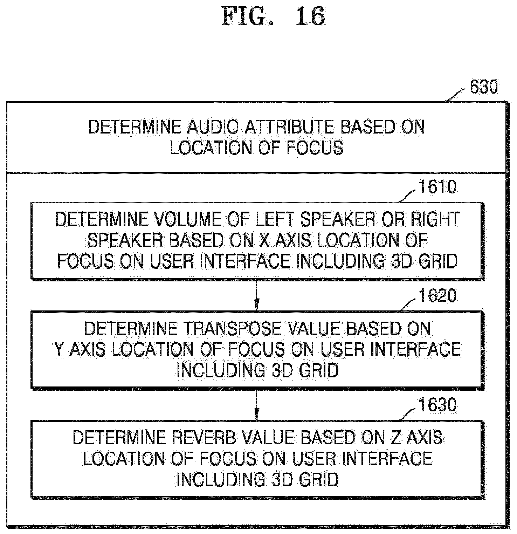

FIG. 16 is a flowchart illustrating an example process of determining an audio attribute according to a movement of a focus on a user interface including a 3D grid according to an embodiment.

Referring to FIG. 16, in operation 1610, a display device may determine volume of a left speaker or a right speaker based on an x axis location of the focus on the user interface including the 3D grid. For example, the display device may volume up the left speaker if the focus is close to a left side on an x axis and may volume down the right speaker if the focus is close to a right side on the x axis.

In operation 1620, the display device may determine a transpose value based on a y axis location of the focus on the user interface including the 3D grid. For example, the display device may reduce the transpose value if the focus is close to a lower portion on a y axis and may increase the transpose value if the focus is close to an upper portion on the y axis.

In operation 1630, the display device may determine a reverb value based on a z axis location of the focus on the user interface including the 3D grid.

Reverb refers to echo for better sound acoustics and is a kind of a sound effect. Sound from a sound source makes sound in all directions as well as a direction toward users' ears, and thus, firstly heard sound is the most intense from a straight direction that is the closest direction. In addition, sounds traveling along various paths such as sound heard reflected from walls, sound heard reflected from floors, etc. are heard via a farther distance than original sound, and thus the sounds are heard slightly later. If such minutely reflected sound is heard with a time difference from original sound, the user feels a space sense of sound, which is called reverb. Reverb is generally sound having a short time difference between relatively reflected sound and original sound. Reflected sound having a relatively big time difference refers to echo or delay. If an amplifier employs reverb as a basic effect, reverb may give a sense of space like as if being present in a large empty space.

Therefore, a reverb value may be adjusted when a focus is at a deep location and a front location on a z axis of a 3D grid user interface, thereby outputting sound by giving a sense of space according to a depth of the focus.

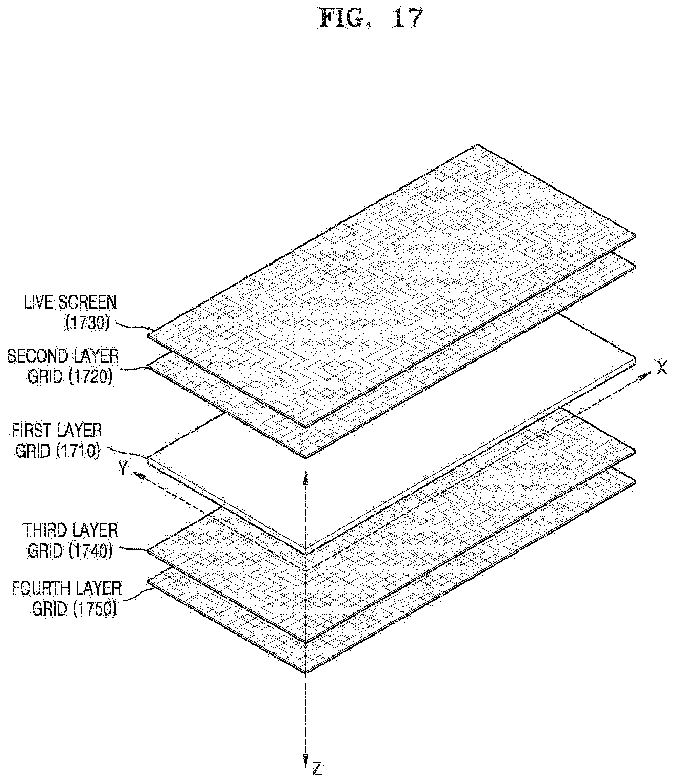

FIG. 17 is an exploded perspective view illustrating an example 3D grid.

Referring to FIG. 17, the 3D grid according to an embodiment may include a first layer grid 1710, a second layer grid 1720, a live screen 1730, a third layer grid 1740, and a fourth layer grid 1750.

The live screen 1730 may be a screen on which audio visual content is reproduced.

Each layer grid may represent a 2D user interface configured as x axis coordinate and y axis coordinates. A z axis may be provided through the first through fourth grid layers 1710, 1720, 1740, and 1750, and thus a 3D grid user interface may be presented. That is, a focus is moved only on x and y axes in a 2D grid user interface, whereas a focus is moved in a z axis as well as the x and y axes on the 3D grid user interface. For example, when a focus is at the first layer grid 1710 on the z axis, since the focus is in front of the live screen 1730, the focus may give an effect of protruding forward toward the user. For example, when a focus is at the fourth layer grid 1750 on the z axis, since the focus is in back of the live screen 1730, the focus may give an effect of going far into the back of the live screen 1730 away from the user.

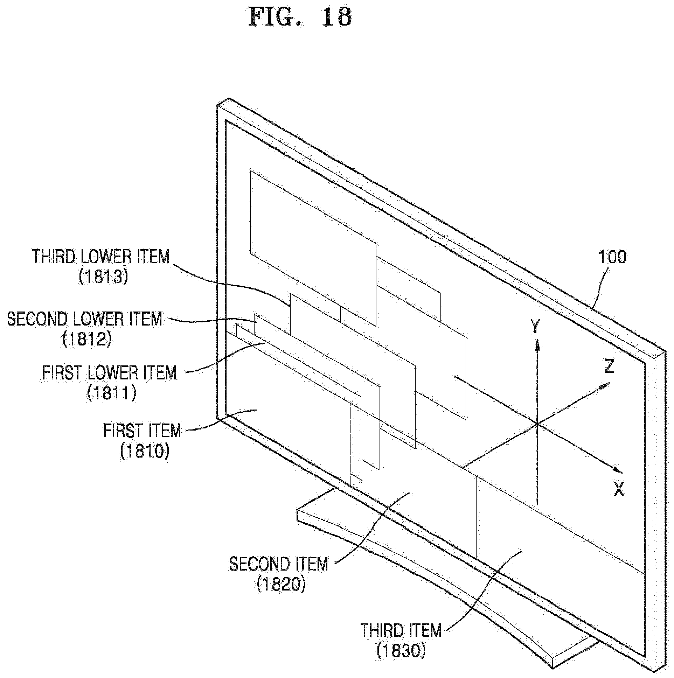

FIG. 18 is a diagram illustrating an example of the display device 100 to which a user interface including a 3D grid is applied according to an example embodiment of the present invention.

Referring to FIG. 18, for example, the display device 100 may display a first item 1810, a second item 1820, and a third item 1830 on a 2D grid including x and y axes and a first lower item 1811, a second lower item 1812, and a third lower item 1813 as lower items of the first item 1810 on a 3D grid including a z axis.

For example, the first item 1810, the second item 1820, and the third item 1830 on the 2D grid may display a representative image representing content, and the first lower item 1811, the second lower item 1812, and the third lower item 1813 on the 3D grid may provide detailed information of each piece of content.

For example, the first item 1810, the second item 1820, and the third item 1830 on the 2D grid may represent broadcast channel numbers, and the first lower item 1811, the second lower item 1812, and the third lower item 1813 on the 3D grid may represent program information of respective channel numbers.

For example, the first item 1810, the second item 1820, and the third item 1830 on the 2D grid may represent content providers, and the first lower item 1811, the second lower item 1812, and the third lower item 1813 on the 3D grid may represent content services provided by respective content providers.

For example, the first item 1810, the second item 1820, and the third item 1830 on the 2D grid may represent a preference channel, a viewing history, a featured channel, etc., and the first lower item 1811, the second lower item 1812, and the third lower item 1813 on the 3D grid may represent preference channel information, viewing history information, featured channel information, respectively.

According to an embodiment, when the display device 100 provides a 3D grid user interface, the display device 100 may output sound by differentiating a sense of space of a location, i.e., a depth, of a focus on a z axis. For example, when the focus is in front of a screen, the display device 100 may output sound that feels as if it is heard close and, when the focus is deep into the screen, the display device 100 may output sound that feels as if it is heard far away. As described above, sound may be output by differentiating reverb according to the depth of the focus on the z axis so that the user may experience the sense of space from sound output according to the depth of the focus.

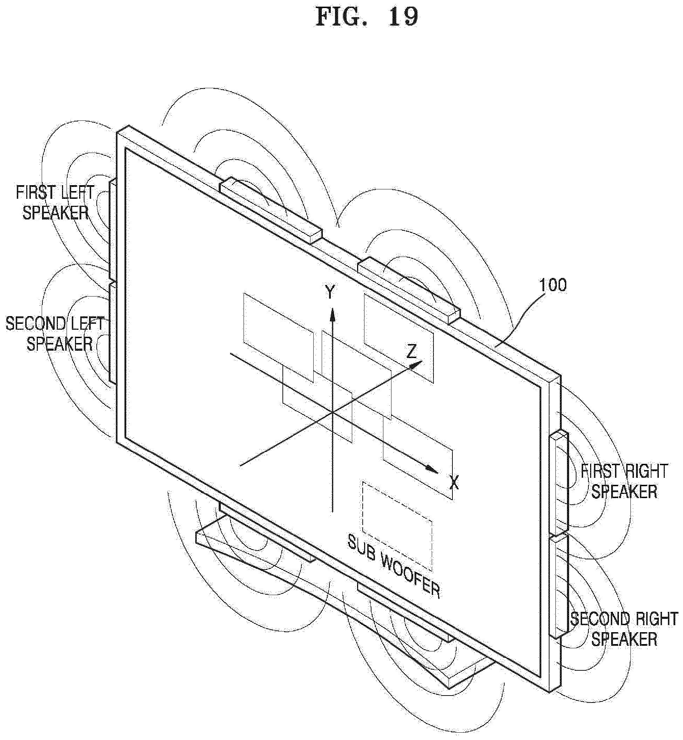

FIG. 19 is a diagram illustrating an example audio attribute determined according to a first path corresponding to a movement of a focus on a user interface including a 3D grid.

Referring to FIG. 19, the display device 100 may include a first left speaker, a second left speaker, a first right speaker, a second right speaker, and a sub woofer. In FIG. 19, the first left speaker, the second left speaker, the first right speaker, and the second right speaker are arranged outside the display device 100 but this is merely for description. The first left speaker, the second left speaker, the first right speaker, and the second right speaker may be embedded in the display device 100.

Also, the display device 100 may provide the user interface including the 3D grid. The 3D grid refers to a grid including x, y, and z coordinates.

According to an embodiment, as illustrated in FIG. 19, a sound feedback generated when the focus is moved on the user interface including the 3D grid may be output to feel directionality and space sense.

Gains, e.g., volumes, of the left speaker and the right speaker may be adjusted according to the x coordinates of the focus on the 3D grid. Transpose values of the left speaker and the right speaker may be adjusted according to the y coordinates of the focus on the 3D grid.

That is, the audio attribute may be adjusted according to the x, y, and z coordinates on the 3D grid as follows,

X axis -> ±Left/Right gain (volume)
Y axis -> ±Transpose (transposition)
Z axis -> ±Reverb (dry/wet effect)

According to an embodiment, a sound feedback corresponding to a location of a focus on a 2D grid user interface may be defined as follows,

[Equation 2]

Sound output (Left gain1, Left gain2, Right gain1, Right gain2, Transpose, Reverb) = (a, b c, d, y, z)

It is assumed that a range of a coordinate value is $0 \leq x \leq 100$, $0 \leq y \leq 100$, $0 \leq z \leq 100$, a+b+c+d=100, Left gain1 denotes volume of the first left speaker, Left gain2 denotes volume of the second left speaker, Right gain1 denotes volume of the first right speaker, Right gain2 denotes volume of the second right speaker, Transpose denotes transposition of C→C#→D→D#, and Reverb denotes sound reverberation or echo.

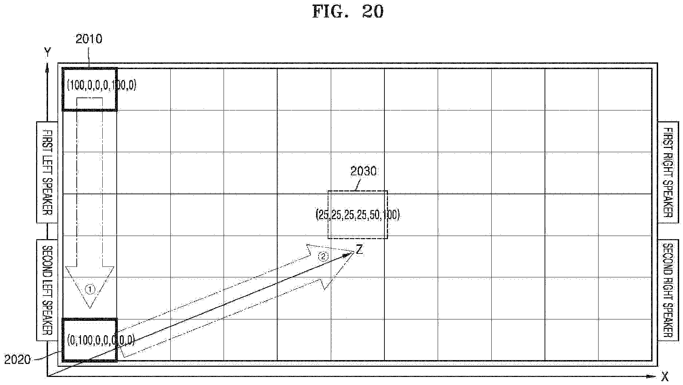

FIG. 20 is a diagram illustrating an example of adjusting an audio attribute according to a movement of a focus in the display device of FIG. 19.

Referring to FIG. 20, a coordinate (x, y, z) of a location 2010 of a screen of the display device is (0, 100, 0). When the focus is at the location 2010, a sound output may be (100, 0, 0, 0, 100, 0) according to a definition of Equation 2 above. (100, 0, 0, 0, 100, 0) indicates that since the focus is at a top left edge, a volume of a first left speaker is maximum, volumes of other speakers are minimum, since the focus is uppermost on a y axis, transposition has a maximum value, and, since a location of the focus on a z axis is 0, a reverb value is o.

When the focus is at a location 2020, a coordinate (x, y, z) of the location 2020 is (0, 0, 0), and a sound output may be (0, 100, 0, 0, 0, 0) according to the definition of Equation 2 above. When the focus is at a location 2030, a coordinate (x, y, z) of the location 2030 is (50, 50, 100), and a sound output may be (25, 25, 25, 25, 50, 100) according to the definition of Equation 2 above.

If a user moves the focus from a top left edge of the display device to a bottom left edge according to the movement of the focus of FIG. 20, sound output from the first left speaker may be moved to sound output from a second left speaker. If the user moves (in the z axis direction) the focus deep into a center of the display device, a sound feedback may be output from the left/right speaker by a moved coordinate, and, since the focus is located deep in a 3D grid, sound that gives a feeling of a sense of space may be output by using reverb. Thus, the user may experience a sense of space whereby it feels as if sound is moving from left to center and is heard far away.

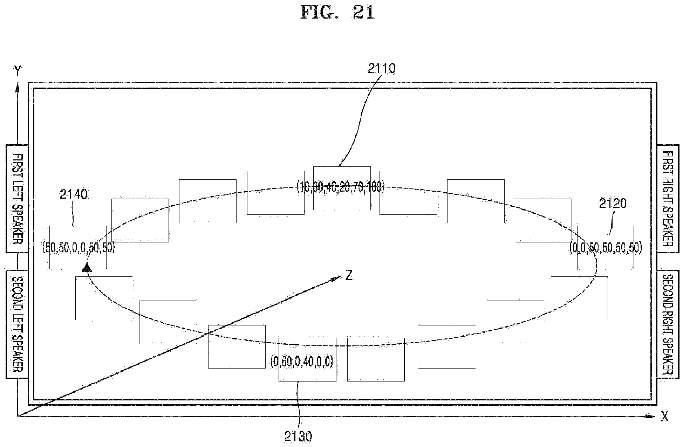

FIG. 21 is a diagram illustrating an example audio attribute determined according to a second path corresponding to a movement of a focus on a user interface including a 3D grid.

Referring to FIG. 21, when the focus is at a location 2110 on a screen of a display device, a sound output may be (10, 30, 40, 20, 70, 100) according to a definition of Equation 2 above. (10, 30, 40, 20, 70, 100) indicates that since the focus is located at about a center location on an x axis, a slightly higher location than a middle location on a y axis, and a maximum depth location on a z axis, volume of a first right speaker, a second left speaker, a first right speaker, and a second right speaker is appropriately mixed, transposition has a slightly high value, and a reverb value is set as 100 since a location on the z axis is 100 that is the maximum.

When the focus is at a location 2120, a sound output may be (o, o, 50, 50, 50, 50) according to the definition of Equation 2 above. When the focus is at a coordinate 2130, a sound output may be (0, 60, 0, 40, 0, 0) according to the definition of Equation 2 above. When the focus is at a coordinate location, a sound output may be (50, 50, 0, o, 50, 50) according to the definition of Equation 1 above.

As illustrated in FIG. 21, if a user moves back the focus located at the center 2130 of the screen of the display device clockwise (e.g., 2130->2140->2110->2120), a sound feedback may be output from a left/right speaker by a moved coordinate, sound may have space sense as if heard far away and again close and may be represented three-dimensionally as if moving clockwise. In the same manner, if the user moves the focus counterclockwise (i.e. 2130->2110->2110->2140), a sound feedback may be output from a left/right speaker by a moved coordinate, sound may give a sense of space like as if it is heard far away and again close and may be represented three-dimensionally as if moving counterclockwise.

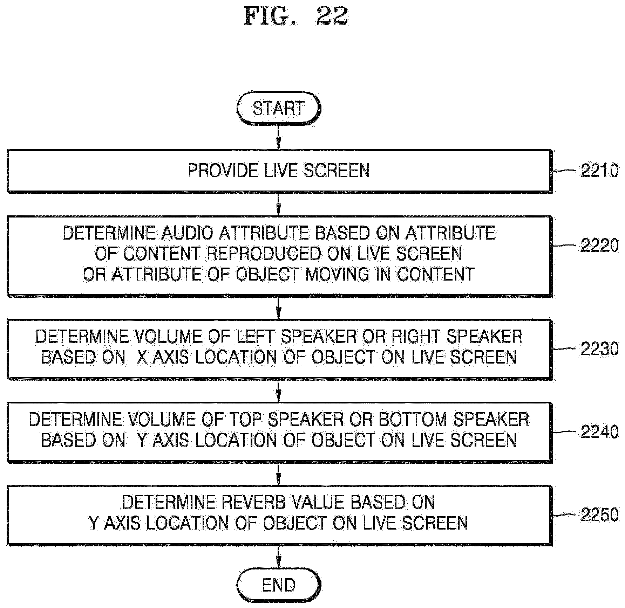

FIG. 22 is a flowchart illustrating an example method of determining and outputting an audio attribute according to an attribute of an object on a live screen according to an example embodiment of the present invention.

Referring to FIG. 22, in operation 2210, a display device may provide the live screen.

In operation 2220, the display device may determine the audio attribute based on an attribute of content reproduced on the live screen or the attribute of the object moving in the content.

According to an embodiment, the attribute of the content may include a dynamic change of the content according to the number of frames, a static change, a color distribution in a screen, contrast, illumination, etc. The attribute of the object moving in the content may include a location movement of the object, etc.

According to an embodiment, when a display device configured as multichannel speakers reproduces content, an attribute value of an object included in the content may be reflected in real time, up/down/left/right/front/back and volume may be represented according to a speaker location, and thus realistic and dramatic sound may be provided.

As an example in which the display device determines the audio attribute according to an attribute of content reproduced on the live screen or the attribute of the object moving in the content, in operation 2230, the display device may determine volume of a left speaker or a right speaker based on an x axis location of the object on the live screen.

In operation 2240, the display device may determine volume of a top speaker or a bottom speaker based on a y axis location of the object on the live screen.

In operation 2250, the display device may determine a reverb value based on the y axis location of the object on the live screen.

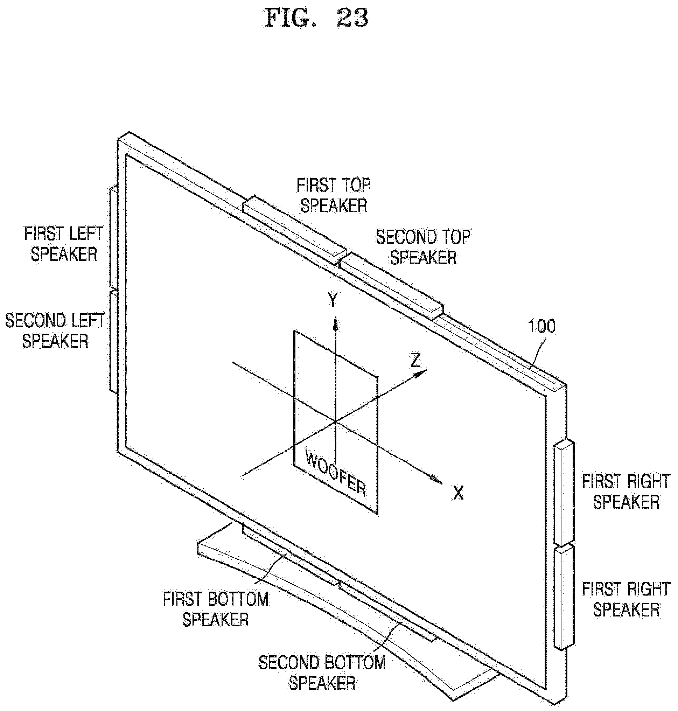

FIG. 23 is a diagram illustrating an example of a display device having an audio environment according to an example embodiment of the present invention.

Referring to FIG. 23, the display device 100 may include a first left speaker, a second left speaker, a first right speaker, a second right speaker, a first top speaker, a second top speaker, a first bottom speaker, a second bottom speaker, and a sub woofer. In FIG. 23, multi speakers are arranged outside the display device 100 but this is merely for description. The multi speakers may be embedded in the display device 100.

Also, the display device 100 may provide a live screen on which audio visual content is reproduced.

According to an embodiment, as illustrated in FIG. 23, a sound feedback may be output to feel directionality and space sense according to an attribute of the audio visual content reproduced on the live screen or an attribute of an object included in the content.

Gains, e.g., volumes, of left speakers and right speakers may be adjusted according to x axis coordinates of an object moving on the live screen. Gains, i.e., volumes, of top speakers and bottom speakers may be adjusted according to y axis coordinates of the object moving on the live screen. A reverb value indicating a space depth may be adjusted according to z axis coordinates of the object moving on the live screen. That is, an audio attribute may be adjusted according to the x, y, and z coordinates of the object moving on the live screen as follows:

X axis -> ±Left/Right gain (volume)
Y axis -> ±Top/Bottom gain
Z axis -> ±Reverb (dry/wet effect)

According to an embodiment, a sound feedback corresponding to a location of the object moving on the live screen may be defined as follows,

[Equation 3]

$$\text{Sound output (Left gain1, Left gain2, Right gain1, Right gain2, Top gain1, Top gain2, Bottom gain1, Bottom gain2, Reverb)} = (a, b\ c, d\ e, f, g, h\ , z)$$

It is assumed that a range of a coordinate value is $0 \leq x \leq 100$, $0 \leq y \leq 100$, $0 \leq z \leq 100$, $a+b+c+d+e+f+g+h=100$, Left gain1 denotes volume of the first left speaker, Left gain2 denotes volume of the second left speaker, Right gain1 denotes volume of the first right speaker, Right gain2 denotes volume of the second right speaker, Top gain1 denotes volume of the first top speaker, Top gain2 denotes volume of the second top speaker, Bottom gain1 denotes volume of the first bottom speaker, Bottom gain2 denotes volume of the second bottom speaker, Transpose denotes transposition of $C{\rightarrow}C\#{\rightarrow}D{\rightarrow}D\#$, and Reverb denotes sound reverberation or echo.

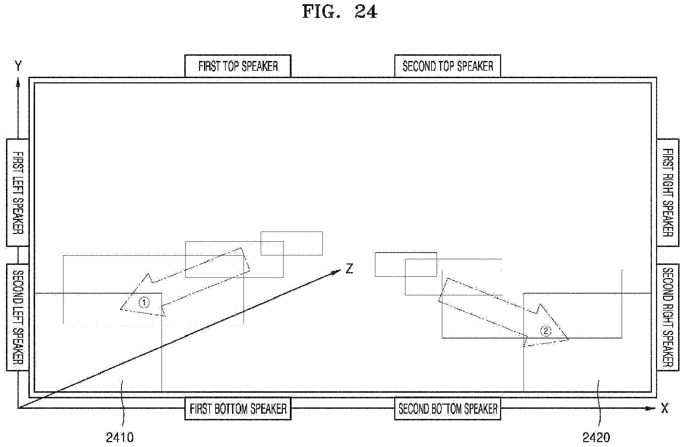

FIG. 24 is a diagram illustrating an example method of determining and outputting an audio attribute according to an attribute of an object on a live screen, according to an example embodiment of the present invention.

Referring to FIG. 24, ① indicates that an object 2410 moves from a rear center to a front left in content reproduced on the live screen, and ② indicates that an object 2420 moves from the rear center to a front right.

The display device 100 may detect the object moving in a stream of the content and may detect a location movement of the moving object.

The display device 100 may use a location change of the moving object to determine the audio attribute.

Referring to FIG. 24, the display device 100 may adjust volume or reverb values of all speakers in order to represent the object 2410 as moving from the back to the front, may increase a volume up of a second left speaker and may reduce volumes down of a first left speaker, a first right speaker, and a second right speaker in order to represent the object 2410 as moving from the center to the front left.

The display device 100 may adjust volume or reverb values of all speakers in order to present the object 2420 to move from the back to the front, may increase a volume up of the second right speaker and may reduce volumes down of the first left speaker, the second left speaker, and the first right speaker in order to represent the object 2420 as moving from the center to the front right.

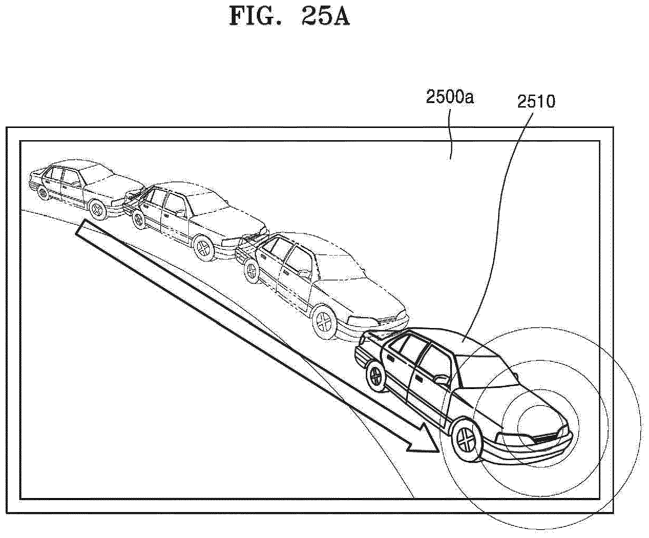

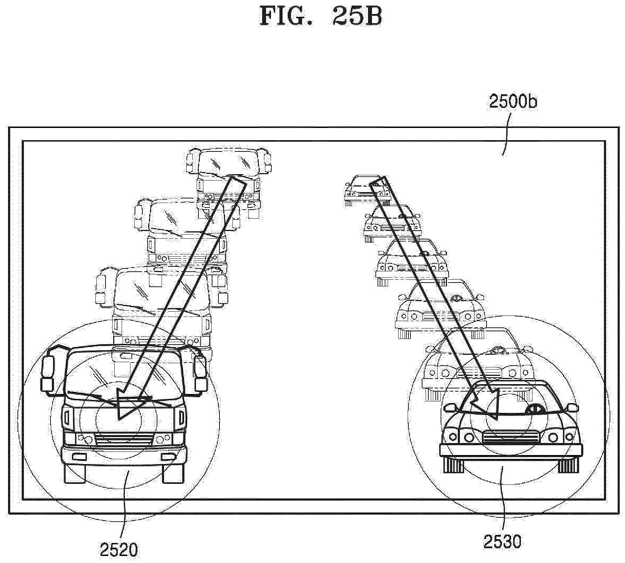

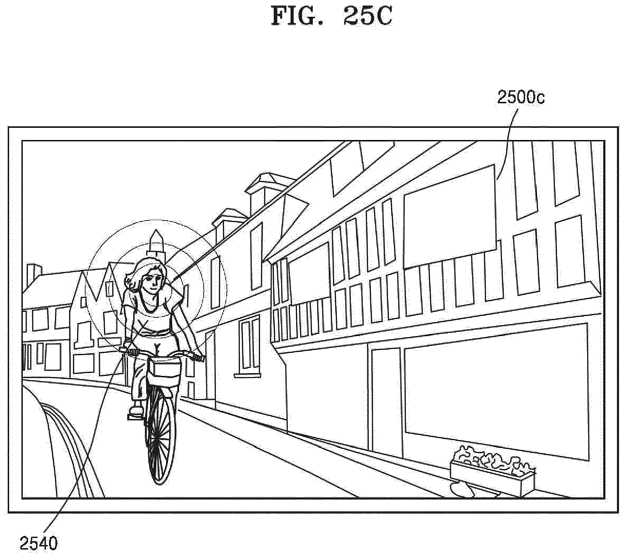

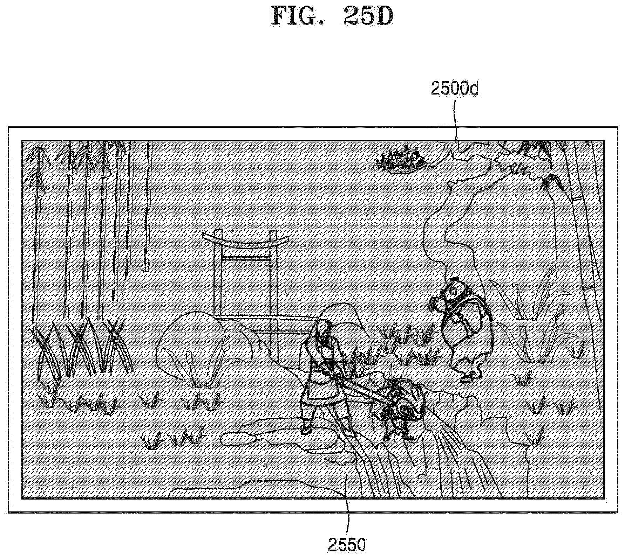

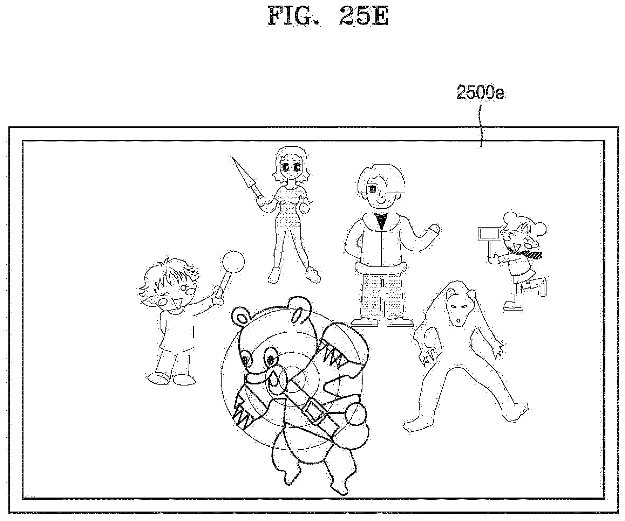

FIGS. 25A, 25B, 25C, 25D and 25E are diagrams illustrating example attributes of various objects on a live screen.

FIG. 25A is a diagram illustrating an example audio output according to a movement of a dynamic object 2510 of content 2500a reproduced on the live screen.

Referring to FIG. 25A, as the dynamic object 2510 moves from the back to the front in the content 2500a reproduced on the live screen, a speaker may increase a volume up. Also, since the dynamic object 2510 moves from the left to the right, a left speaker and a right speaker may be balanced by using a coordinate value of the object 2510.

FIG. 25B is a diagram illustrating an example audio output according to movements of dynamic objects 2520 and 2530 of content 2500b reproduced on the live screen.

Referring to FIG. 25B, as the dynamic objects 2520 and 2530 move from the back to the front in the content 2500b reproduced on the live screen, a speaker may increase a volume up. Also, since the dynamic object 2520 moves to the left and the dynamic object 2530 moves to the right, sound may be separated into left and right in order to reflect coordinate movements of the dynamic objects 2520 and 2530.

FIG. 25C is a diagram illustrating an example audio output according to a movement of a dynamic object of content 2500c reproduced on the live screen.

Referring to FIG. 25C, a volume value may be reflected in accordance with a sound location value of a dynamic frame region 2540 in a static frame in the content 2500c reproduced on the live screen.

FIG. 25D is a diagram illustrating an example audio output according to an attribute of content 2500d reproduced on the live screen.

Referring to FIG. 25D, the content 2500d reproduced on the live screen 2550 may have a dark atmosphere as a whole. Top/bottom/left/right representation and volume values of sound may be reflected according to a color, illumination, or contrast attribute of the content 2500d.

FIG. 25E is a diagram illustrating an example audio output according to an attribute of content 2500e reproduced on the live screen.

Referring to FIG. 25E, the content 2500e reproduced on the live screen may have a bright and colorful atmosphere. Top/bottom/left/right representation and volume values of sound may be reflected according to a color, illumination, or contrast attribute of the content 2500e.

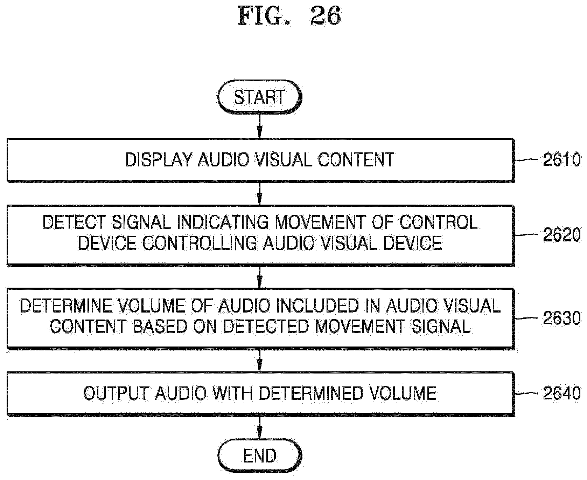

FIG. 26 is a flowchart illustrating an example method of controlling audio volume based on a movement signal of a control device according to an example embodiment of the present invention.

Referring to FIG. 26, in operation 2610, a display device may display audio visual content.

In operation 2620, the display device may detect a signal indicating a movement of the control device controlling an audio visual device.

According to an embodiment the indicating the movement of the control device may include at least one of a movement signal moving the control device in a diagonal direction, a movement signal indicating a movement of the control device that inclines forward and backward, and a signal indicating a swipe operation on a touch sensitive screen provided in the control device.

The movement of the control device may be detected using the Gyro sensor 241 or the acceleration sensor 243 included in the control device of FIG. 4.

In operation 2630, the display device may determine volume of audio included in the audio visual content based on the sensed movement signal.

In operation 2640, the display device may output audio with the determined volume.

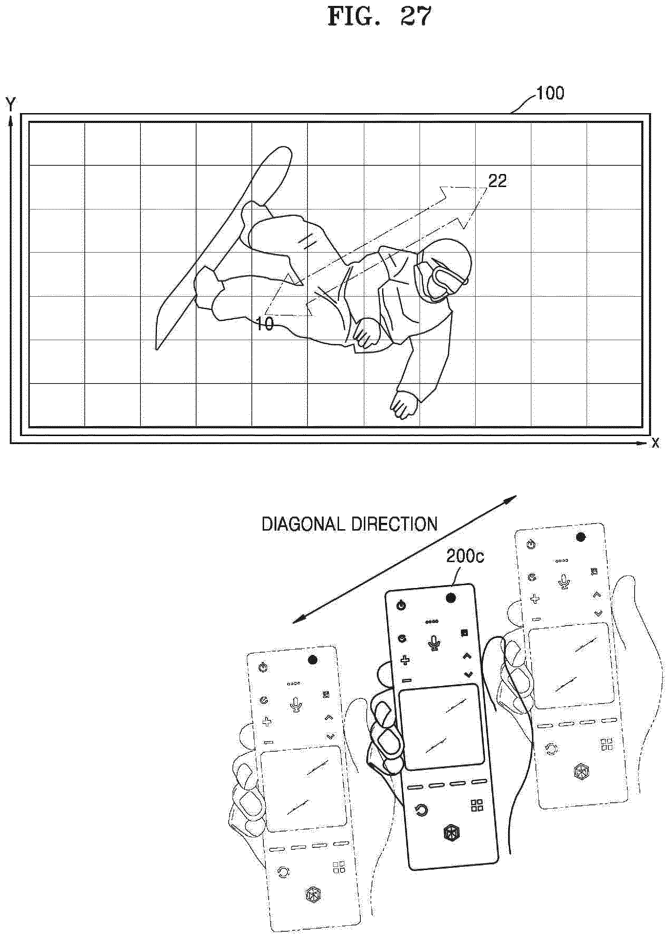

FIG. 27 is a diagram illustrating an example of controlling audio volume based on a movement signal of a control device 200c indicating a movement in a diagonal direction according to an example embodiment of the present invention.

Referring to FIG. 27, the display device 100 may reproduce audio visual content. In this state, if a user moves the control device 200c up and down in the diagonal direction on a screen, the display device 100 may receive the movement signal of the control device 200c indicating the movement in the diagonal direction. The display device 100 may increase 22 or reduce 10 a volume value of the audio visual content reproduced by the display device 100 by a moved coordinate value based on the movement signal of the diagonal direction received from the control device 200c. In this regard, the diagonal direction is merely an example and different directions may be possible.

As described above, a master volume value of the audio visual content reproduced by the display device 100 may be controlled by moving the control device 200c in the diagonal direction, and thus the user may adjust volume of content such as a movie that the user is watching by holding a remote controller in his/her hand and merely moving the remote controller in the diagonal direction without having to press a button of the remote controller when viewing the content through the display device 100, thereby easily adjusting the volume of the content without having to visually check the movie.

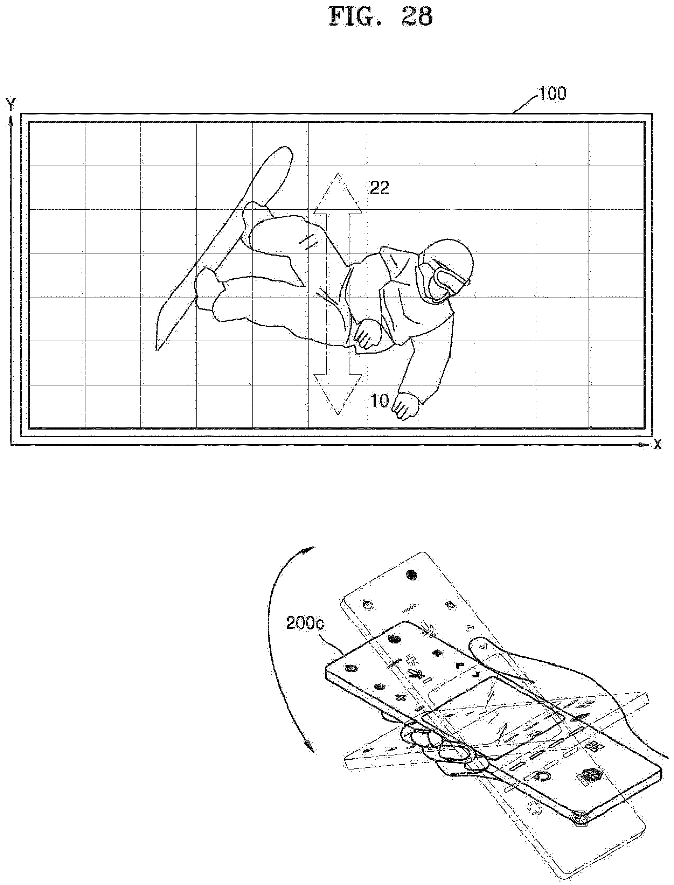

FIG. 28 is a diagram illustrating an example of controlling audio volume based on a movement signal of the control device 200c indicating forward and backward inclinations according to an embodiment.

Referring to FIG. 28, the display device 100 may reproduce audio visual content. In this state, if a user inclines the control device 200C forward and backward, the display device 100 may receive a signal indicating an inclination movement of the control device 200c. The display device 100 may increase 22 or reduce 10 a volume value of the audio visual content reproduced by the display device 100 by a moved coordinate value based on the movement signal of the inclination received from the control device 200c.

As described above, a master volume value of the audio visual content reproduced by the display device 100 may be controlled by inclining the control device 200C forward and backward, and thus the user may adjust the volume of content such as a movie that the user is watching by holding a remote controller in his/her hand and merely inclining the remote controller forward and backward without having to press a button of the remote controller when viewing the content through the display device 100, thereby easily adjusting the volume of the content without having to visually check the movie.

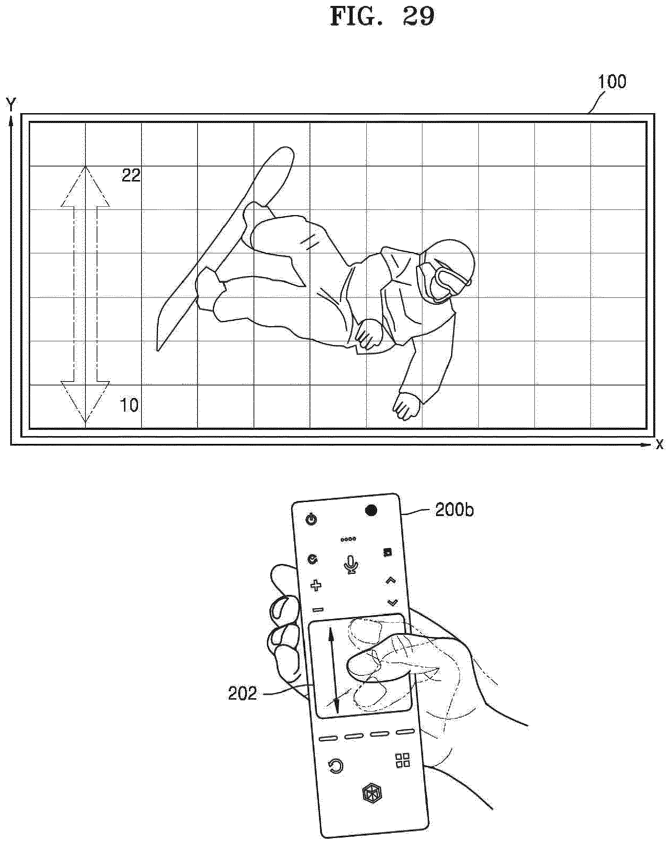

FIG. 29 is a diagram illustrating an example of controlling audio volume based on a signal indicating a swipe operation on a touch sensitive screen provided in a control device 200b according to an embodiment.

Referring to FIG. 29, the display device 100 may reproduce audio visual content. In this state, if a user performs the swipe operation on a touch pad 202 included in a control device 200b, the display device 100 may receive a swipe operation signal of the control device 200b. The display device 100 may increase 22 or reduce 10 a volume value of the audio visual content reproduced by the display device 100 by a moved coordinate value based on the swipe operation signal received from the control device 200b.

As described above, a master volume value of the audio visual content reproduced by the display device 100 may be controlled by performing the swipe operation on the touch pad 202 of the control device 200b, and thus the user may adjust a volume of content such as a movie that the user is watching by the user holding a remote controller in his/her hand and merely sliding the touch pad 202b with his/her finger without having to press a button of the remote controller when viewing the content through the display device 100, thereby easily adjusting the volume of the content without having to visually check the movie.

As described above, according to the embodiments, upon user manipulation in a display environment, a sound feedback that gives a sense of a location of a focus on content in user interfaces arranged in top/bottom/left/right or front/back may be provided to a user without the user wholly concentrating on the focus.

According to the embodiments, directionality and sense of space with respect to user manipulation such as a movement, a selection, etc. may be provided, thereby more 3-dimensionally providing a user experience as well as a user interface motion.

According to the above embodiments, a volume balance that is an important aspect of a sound experience of a user who consumes content may be controlled in accordance with a location and situation of an object included in the content, thereby providing a realistic and dramatic sound experience.

According to the embodiments, master volume of a sound source of content that is currently reproduced may be adjusted by using a remote controller through simple manipulation.

The term "module" used in various embodiments of the present invention may refer, for example, to a unit including one or two or more combinations of, for example, hardware, software, or firmware. The module may be interchangeably used with terms for example, units, logics, logical blocks, components, or circuits. The module may be a minimum unit of a part that is integrally formed or a part thereof. The module may be a minimum unit performing one or more functions or a part thereof. The module may be embodied mechanically or electronically. For example, the modules according to various embodiments of the present invention may include at least one of a dedicated processor, a CPU, an application-specific integrated circuit (ASIC) chip, field-programmable gate arrays (FPGAs), or a programmable-logic device, which performs a certain operation that is already known or will be developed in the future.

According to various embodiments, at least part of a device, for example, modules or functions thereof, or a method, for example, operations, according to various embodiments of the present invention may be embodied by commands stored in a computer-readable storage media in form of, for example, a programming module or by computer programs stored in a computer program product. When the command is executed by one or more processors, the one or more processors may perform a function corresponding to the command. The computer-readable medium may be, for example, the memory. At least part of the programming module may be implemented by, for example, the processor. At least part of the programming module may include, for example, modules, programs, routines, sets of instructions, or processes, to perform one or more functions.

Examples of the computer-readable recording medium include magnetic media, e.g., hard disks, floppy disks, and magnetic tapes, optical media, e.g., compact disc read only memories (CD-ROMs) and digital versatile disks (DVDs), magneto-optical media, e.g., floptical disks, and hardware device configured to store and execute program commands, for example, programming modules, e.g., read only memories (ROMs), random access memories (RAMs), flash memories. Also, the program command may include not only machine codes created by a compiler but also high-level language codes executable by a computer using an interpreter. The above-described hardware devices may be configured to operate as one or more software modules to perform operations according to various embodiments of the present invention, or vise versa.

A module or programming module according to various embodiments of the present invention may include at least one of the above-described elements or the at least one of the above-described elements may be omitted or additional other elements may be further included. According to various embodiments of the present invention, operations may be performed by modules, programming modules, or other elements in a sequential, parallel, iterative, or heuristic method. Also, some operations may be performed in a different order, omitted, or other operations may be added thereto.

The embodiments of the present invention are described for clear understanding by referring to different functional units and processes. However, it will be apparent that functions may be appropriately distributed among different functional units or processors. For example, the functions described to be performed by independent processors or controllers may be performed by the same processor or controller and, in some cases, these functions may be interchangeable. As a result, references to particular functional units may be interpreted to refer to an appropriate means simply performing a function, not indicating strictly logical or physical structures or organizations.

Although the present invention is described through various example embodiments, the present invention is not limited to the particular format described herein. The scope of the present invention is defined by the accompanying claims. Also, even when the characteristics of the present invention are described in relation with some embodiment, it will be apparent to one of ordinary skill in the art to which the present disclosure pertains that the above-described embodiments may be combined.

Furthermore, although many devices, elements, or operations are listed, they may be implemented by a single unit or processor.

Descriptions of features or aspects within each example embodiment should typically be considered as available for other similar features or aspects in other embodiments.

**Claims**

1. A display device comprising:

   a display configured to output a user interface;
   an audio output interface comprising audio output interface circuitry; and
   a controller configured to detect a control signal for moving a focus on the user interface, to determine an attribute of audio based on a location of the focus corresponding to the control signal, and to control the audio output interface to output a sound feedback including the determined audio attribute.

2. The display device of claim 1, wherein the audio attribute comprises at least one of: a volume of a top speaker, a volume of a bottom speaker, a volume of a left speaker, a volume of a right speaker, a volume of a front speaker, or a volume of a rear speaker, transposition, reverb, and equalization.

3. The display device of claim 1 or claim 2,
   wherein the user interface comprises a two-dimensional (2D) grid,
   wherein the audio output interface comprises at least two speakers, and
   wherein the controller is configured to determine the audio attribute using at least one of: volumes and transpositions of the at least two speakers based on the location of the focus.

4. The display device of claim 3, wherein the controller is configured to determine a volume of a left speaker or a right speaker based on an x axis location of the focus on the 2D grid and to determine a transpose value based on a y axis location of the focus on the 2D grid.

5. The display device of claim 1 or claim 2,
   wherein the user interface comprises a three-dimensional (3D) grid,
   wherein the audio output interface comprises at least two speakers, and
   wherein the controller is configured to determine the audio attribute using at least one of: volumes, transpositions, and reverbs of the at least two speakers based on the location of the focus.

6. The display device of claim 5, wherein the controller is configured to determine a volume of a left speaker or a right speaker based on an x axis location of the focus on the 3D grid, to determine a transpose value based on a y axis location of the focus on the 3D grid, and to determine a reverb value based on a z axis location of the focus on the 3D grid.

7. The display device of any one of the preceding claims,
   wherein the display is configured to provide a live screen, and
   wherein the controller is configured to determine the audio attribute based on at least one of: a location of an object moving in content reproduced on the live screen and an attribute of the content.

8. The display device of claim 7, wherein the controller is configured to determine a volume of a left speaker or a right speaker based on an x axis location of the object on the live screen, to determine a volume of a top speaker or a bottom speaker based on a y axis location of the object on the live screen, and to determine a reverb value based on a z axis location of the object on the live screen.

9. A display method comprising:

   detecting a control signal for moving a focus on a user interface;
   determining an attribute of audio based on a location of the focus corresponding to the control signal; and
   outputting a sound feedback having the determined audio attribute.

10. The method of claim 9, wherein the audio attribute comprises at least one of: a volume of a top speaker, a volume of a bottom speaker, a volume of a left speaker, a volume of a right speaker, a volume of a front speaker, or a volume of a rear speaker, transposition, reverb, and equalization.

11. The method of claim 9 or claim 10, wherein the user interface comprises a 2D grid and further comprising:

    determining the audio attribute using at least one of volumes and transpositions of at least two speakers based on the location of the focus on the user interface comprising the 2D grid.

12. The method of claim 11, further comprising:

    determining a volume of a left speaker or a right speaker based on an x axis location of the focus on the 2D grid; and
    determining a transpose value based on a y axis location of the focus on the 2D grid.

13. The method of claim 9 or claim 10, wherein the user interface comprises a 3D grid, and further comprising:

    determining the audio attribute using at least one of: volumes, transpositions, and reverbs of the at least two speakers based on the location of the focus on the user interface comprising the 3D grid.

14. The method of claim 13, further comprising:

    determining a volume of a left speaker or a right speaker based on an x axis location of the focus on the 3D grid;
    determining a transpose value based on a y axis location of the focus on the 3D grid; and
    determining a reverb value based on a z axis location of the focus on the 3D grid.

15. The method of any one of claims 9 to 14, further comprising:

    providing a live screen; and
    determining the audio attribute based on at least one of: a location of an object moving in content reproduced on the live screen and an attribute of the content.

# FIG. 1

# FIG. 2

FIG. 3

# FIG. 4

# FIG. 5

200a 200b 200c

201 202 204 204 203

# FIG. 6

```
        ( START )
            │
            ▼
┌─────────────────────────────────┐
│     PROVIDE USER INTERFACE      │──── 610
└─────────────────────────────────┘
            │
            ▼
┌─────────────────────────────────┐
│   DETECT INPUT SIGNAL MOVING    │──── 620
│     FOCUS ON USER INTERFACE     │
└─────────────────────────────────┘
            │
            ▼
┌─────────────────────────────────┐
│  DETERMINE AUDIO ATTRIBUTE      │──── 630
│  BASED ON LOCATION OF FOCUS     │
│  CORRESPONDING TO INPUT SIGNAL  │
└─────────────────────────────────┘
            │
            ▼
┌─────────────────────────────────┐
│  OUTPUT SOUND FEEDBACK HAVING   │──── 640
│   DETERMINED AUDIO ATTRIBUTE    │
└─────────────────────────────────┘
            │
            ▼
        (  END  )
```

# FIG. 7

630

DETERMINE AUDIO ATTRIBUTE BASED ON
LOCATION OF FOCUS

710

DETERMINE VOLUME OF LEFT SPEAKER OR
RIGHT SPEAKER BASED ON X AXIS
LOCATION OF FOCUS ON 2D GRID

720

DETERMINE TRANSPOSE VALUE ACCORDING
TO Y AXIS LOCATION OF FOCUS ON 2D GRID

# FIG. 8

LEFT SPEAKER

SUB WOOFER

RIGHT SPEAKER

100

Y

Y

# FIG. 9

FIG. 10

# FIG. 11

FIG. 12

FIG. 13

FIG. 14

FIG. 15

# FIG. 16

```
┌──────────────────────────────────────────────────────┐ ⌒630
│            DETERMINE AUDIO ATTRIBUTE BASED ON          │
│                  LOCATION OF FOCUS                     │
├──────────────────────────────────────────────────────┤
│   ┌─────────────────────────────────────────────┐ ⌒1610
│   │  DETERMINE VOLUME OF LEFT SPEAKER OR RIGHT    │    │
│   │     SPEAKER BASED ON X AXIS LOCATION OF       │    │
│   │  FOCUS ON USER INTERFACE INCLUDING 3D GRID    │    │
│   └─────────────────────────────────────────────┘    │
│                        │                              │
│                        ▼                              │
│   ┌─────────────────────────────────────────────┐ ⌒1620
│   │      DETERMINE TRANSPOSE VALUE BASED ON       │    │
│   │  Y AXIS LOCATION OF FOCUS ON USER INTERFACE   │    │
│   │              INCLUDING 3D GRID                │    │
│   └─────────────────────────────────────────────┘    │
│                        │                              │
│                        ▼                              │
│   ┌─────────────────────────────────────────────┐ ⌒1630
│   │   DETERMINE REVERB VALUE BASED ON Z AXIS      │    │
│   │   LOCATION OF FOCUS ON USER INTERFACE         │    │
│   │              INCLUDING 3D GRID                │    │
│   └─────────────────────────────────────────────┘    │
└──────────────────────────────────────────────────────┘
```

# FIG. 17

LIVE SCREEN (1730)

SECOND LAYER GRID (1720)

FIRST LAYER GRID (1710)

THIRD LAYER GRID (1740)

FOURTH LAYER GRID (1750)

X

Y

Z

# FIG. 18

THIRD LOWER ITEM
(1813)

SECOND LOWER ITEM
(1812)

FIRST LOWER ITEM
(1811)

FIRST ITEM
(1810)

SECOND ITEM
(1820)

THIRD ITEM
(1830)

100

Y

Z

X

# FIG. 19

FIG. 20

FIG. 21

# FIG. 22

```
                    ┌─────────┐
                    │  START  │
                    └────┬────┘
                         ▼
┌────────────────────────────────────────────────┐
│               PROVIDE LIVE SCREEN               │──── 2210
└────────────────────────┬───────────────────────┘
                         ▼
┌────────────────────────────────────────────────┐
│   DETERMINE AUDIO ATTRIBUTE BASED ON ATTRIBUTE  │
│    OF CONTENT REPRODUCED ON LIVE SCREEN         │──── 2220
│   OR ATTRIBUTE OF OBJECT MOVING IN CONTENT      │
└────────────────────────┬───────────────────────┘
                         ▼
┌────────────────────────────────────────────────┐
│ DETERMINE VOLUME OF LEFT SPEAKER OR RIGHT SPEAKER│
│ BASED ON  X AXIS LOCATION OF OBJECT ON LIVE SCREEN│──── 2230
└────────────────────────┬───────────────────────┘
                         ▼
┌────────────────────────────────────────────────┐
│ DETERMINE VOLUME OF TOP SPEAKER OR BOTTOM SPEAKER│
│ BASED ON  Y AXIS LOCATION OF OBJECT ON LIVE SCREEN│──── 2240
└────────────────────────┬───────────────────────┘
                         ▼
┌────────────────────────────────────────────────┐
│           DETERMINE REVERB VALUE BASED ON       │
│     Y AXIS LOCATION OF OBJECT ON LIVE SCREEN    │──── 2250
└────────────────────────┬───────────────────────┘
                         ▼
                    ┌─────────┐
                    │   END   │
                    └─────────┘
```

# FIG. 23

FIRST TOP SPEAKER

SECOND TOP SPEAKER

FIRST LEFT SPEAKER

SECOND LEFT SPEAKER

Y

Z

100

WOOFER

X

FIRST RIGHT SPEAKER

FIRST RIGHT SPEAKER

FIRST BOTTOM SPEAKER

SECOND BOTTOM SPEAKER

FIG. 24

FIG. 25A

FIG. 25B

# FIG. 25C

2500c

2540

## FIG. 25D

FIG. 25E

2500e

# FIG. 26

START

DISPLAY AUDIO VISUAL CONTENT — 2610

DETECT SIGNAL INDICATING MOVEMENT OF CONTROL DEVICE CONTROLLING AUDIO VISUAL DEVICE — 2620

DETERMINE VOLUME OF AUDIO INCLUDED IN AUDIO VISUAL CONTENT BASED ON DETECTED MOVEMENT SIGNAL — 2630

OUTPUT AUDIO WITH DETERMINED VOLUME — 2640

END

# FIG. 27

DIAGONAL DIRECTION

200c

# FIG. 28

# FIG. 29